# EUROPÄISCHE PATENTSCHRIFT

(11) **EP 3 932 113 B1**
(45) Veröffentlichungstag und Bekanntmachung des Hinweises auf die Patenterteilung: **09.04.2025**
(21) Anmeldenummer: 20707254.7
(22) Anmeldetag: 26.02.2020
(51) Int. Cl.: H04W 40/24

(54) **SIGNALISIERUNG EINER MULTICAST-NACHRICHT IN NICHT KOORDINIERTEN NETZEN**
SIGNALLING A MULTICAST MESSAGE IN NON-COORDINATED NETWORKS
SIGNALISATION D'UN MESSAGE MULTIDIFFUSION DANS DES RÉSEAUX NON COORDONNÉS

(30) Priorität: 28.02.2019 DE 102019202725
(43) Veröffentlichungstag der Anmeldung: 05.01.2022
(73) Patentinhaber: Fraunhofer-Gesellschaft zur Förderung der angewandten Forschung e.V., 80686 München (DE); Diehl Metering GmbH, 91522 Ansbach (DE)
(72) Erfinder: KILIAN, Gerd, 91058 Erlangen (DE); BERNHARD, Josef, 91058 Erlangen (DE); KAUPPERT, Thomas, 90455 Nürnberg (DE); PETKOV, Hristo, 90425 Nürnberg (DE); WECHSLER, Johannes, 91058 Erlangen (DE); KNEISSL, Jakob, 91058 Erlangen (DE); MZYK, Raphael, 91126 Kammerstein (DE); GOTTSCHALK, Klaus, 90610 Winkelhaid (DE); SOLLER, Dominik, 91058 Erlangen (DE); SCHLICHT, Michael, 91058 Erlangen (DE)
(74) Vertreter: Schlenker, Julian
(86) Internationale Anmeldenummer: PCT/EP2020/054977
(87) Internationale Veröffentlichungsnummer: WO 2020/173975

(56) Entgegenhaltungen:
- EP-A1- 1 521 394
- EP-A1- 1 657 852
- WO-A1-2018/167035
- US-A1- 2017 310 497

## Beschreibung

Ausführungsbeispiele der vorliegenden Erfindung beziehen sich auf ein drahtloses Kommunikationssystem mit einer Vielzahl von unkoordiniert sendenden Teilnehmern, und im speziellen, auf die Übertragung einer Multicast-Nachricht (Punkt-zu-Mehrpunkt-Nachricht) in einem solchen Kommunikationssystem. Manche Ausführungsbeispiele beziehen sich auf eine Signalisierung einer Multicast-Nachricht in nicht koordinierten Netzen.

In typischen Funknetzten (oder drahtlosen Kommunikationssystemen), wie z.B. GSM (GSM = Global System for Mobile Communications), gibt es eine koordinierende Instanz, welche den Teilnehmern des Funknetzes bei Bedarf Funkressourcen zur Verfügung stellt, die ausschließlich dem jeweiligen Teilnehmer zur Verfügung stehen.

Dadurch kann sichergestellt werden, dass jeder Teilnehmer seine Daten in einer exklusiv für ihn reservierten Funkressource übertragen kann. Dadurch werden Interferenzen zwischen den Teilnehmern eines Funknetzes vermieden und damit der Durchsatz maximiert.

Die Koordination der Teilnehmer zu Funkressourcen geschieht in solchen Funknetzen in der Regel durch sog. Baken (engl. beacon), auf welchen die Teilnehmer des Funknetzes hören. Durch die Signalisierung der Funkressourcen in diesen Baken ist es erforderlich, dass alle Teilnehmer diese empfangen und auswerten, um anschließend Daten empfangen oder senden zu können. Der Stromverbrauch eines Teilnehmers, welcher nur selten auf den Kanal zugreift, ist somit sehr hoch.

Ein anderer Ansatz ist dagegen ein nicht-koordiniertes Funknetz, indem die Teilnehmer ihre Daten konkurrenzbasiert (engl. contension based) an den Empfänger übertragen. Somit muss nicht dauerhaft eine Bake empfangen werden, welche signalisiert, wann welcher Teilnehmer auf welcher Frequenz senden darf. Dadurch reduziert sich der Stromverbrauch der Teilnehmer, da diese nur bei Bedarf aktiviert werden müssen.

Dieses Verfahren hat jedoch den Nachteil, dass es zu Interferenzen zwischen den Teilnehmern des Funknetzes kommen kann. Dieser Nachteil kann jedoch durch den Einsatz von "Telegram Splitting Multiple Access" (TSMA) [4] vermindert werden, wodurch sich ähnliche Durchsätze wie bei einem koordinierten System erzielen lassen.

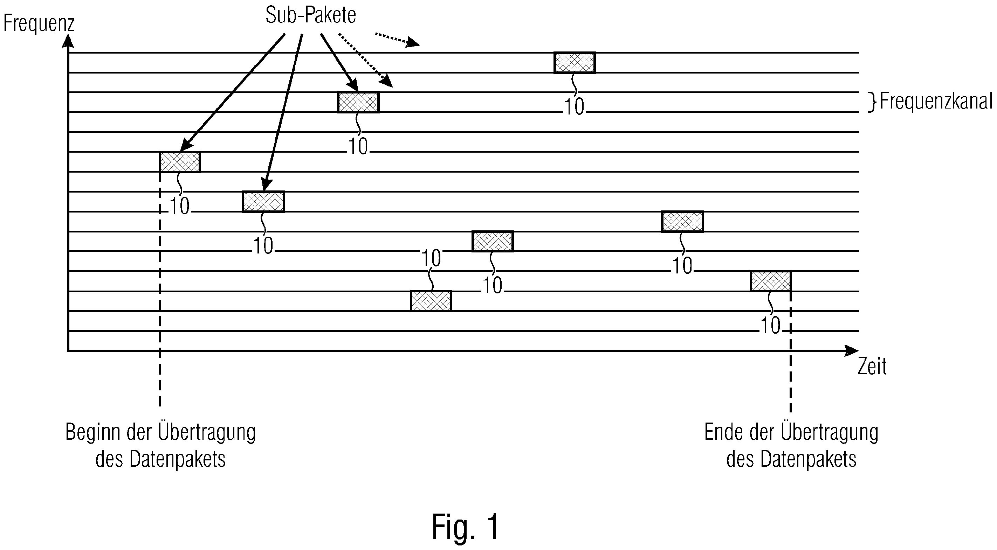

Bei "Telegram Splitting Multiple Access" (TSMA) wird die Übertragung einer Nachricht (Datenpaket) in eine Mehrzahl kurzer Sub-Datenpakete (Bursts) unterteilt, zwischen denen sich jeweils unterschiedlich lange, übertragungsfreie Zeitintervalle befinden. Die Sub-Datenpakete sind dabei nach einem Pseudo-Zufallsprinzip sowohl über die Zeit wie auch über die zur Verfügung stehenden Frequenzkanäle verteilt, wie dies in Fig. 1 beispielhaft gezeigt ist.

Im Detail zeigt Fig. 1 in einem Diagramm eine Belegung eines Frequenzbands eines TSMA-basierten Kommunikationssystems bei der Übertragung eines auf eine Mehrzahl von Sub-Datenpaketen 10 aufgeteilten Datenpakets, wobei die Mehrzahl von Sub-Datenpaketen in der Zeit und Frequenz verteilt sind. Dabei beschreibt in Fig. 1 die Ordinate die Frequenz (Frequenzkanäle) und die Abszisse die Zeit. Mit anderen Worten, Fig. 1 zeigt das Prinzip der Datenübertragung nach dem TSMA-Verfahren.

Es wurde in [1] gezeigt, dass mit dem TSMA-Verfahren eine größere Kapazität in der Datenübertragung erzielt werden kann als bei Übertragung eines Datenpakets in einem zusammenhängenden Block, d.h. ohne Aufteilung in Sub-Datenpakete 10. Um eine möglichst große Systemkapazität zu erhalten, sollten möglichst viele unterschiedliche Zeit- und/oder Frequenzsprungmuster (engl. hopping pattern) eingesetzt werden [3]. Die Gesamtzahl der verwendeten Zeit- und/oder Frequenzsprungmuster sollte dabei endlich sein und einem vorab bekannten Vorrat an Zeit- und/oder Frequenzsprungmustern entstammen.

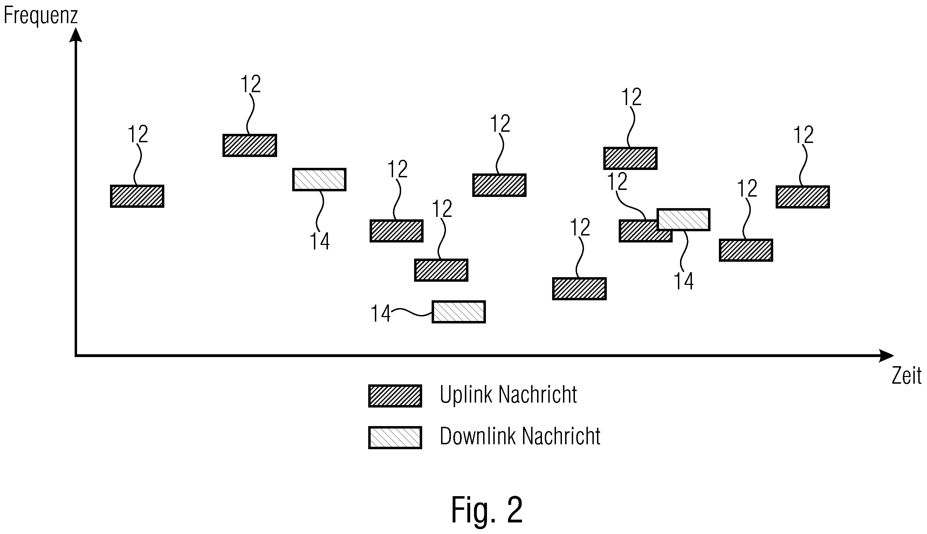

Durch den konkurrenzbasierten Zugriff auf den Kanal zu zufälligen Zeitpunkten entsteht eine asynchrone Übertragung, wie dies beispielhaft in Fig. 2 für ein Kommunikationssystem ohne TSMA gezeigt ist.

Im Detail zeigt Fig. 2 in einem Diagramm eine Belegung eines Frequenzbands eines konkurrenzbasierten Kommunikationssystems bei der Übertragung mehrerer Uplink-Nachrichten 12 und mehrerer Downlink-Nachrichten 14. Dabei beschreibt in Fig. 2 die Abszisse die Frequenz und die Ordinate die Zeit. Mit anderen Worten, Fig. 2 zeigt ein Schema eines Übertragungskanals in einem nicht koordinierten Kommunikationssystem.

In der Regel gibt es in einem nicht koordinierten Kommunikationssystem mehrere Teilnehmer (z.B. Endpunkte), welche mit einer Basisstation kommunizieren. Dabei handelt es sich bei der Übertragung einer Nachricht von einem Teilnehmer zu der Basisstation um den Uplink und in umgekehrter Richtung um den Downlink.

Aus Energieeffizienzgründen schalten die Teilnehmer ihr Sendeempfangsmodul in der Regel nur dann ein, wenn sie eine Nachricht versenden wollen. Der Empfang einer der Downlink-Nachrichten 14, wie sie in Fig. 2 gezeigt sind, ist somit nicht möglich.

In [4] wurde zur Lösung dieses Problems definiert, dass der Teilnehmer nach Aussendung einer Uplink-Nachricht eine fest definierte Zeit wartet, um dann ein Empfangsfenster für eine Downlink-Nachricht zu öffnen. Die Basisstation kann eine Downlink-Nachricht somit nur zu einem bestimmen Zeitpunkt an diesen Teilnehmer senden.

Typischerweise wird der Downlink zu den Teilnehmern, bei welchen die unkoordinierte Übertragung eingesetzt wird, für Nachrichten genutzt, die an mehrere Teilnehmer übermittelt werden soll, z. B. Software-Updates oder Time-Sync-Befehle.

Durch den asynchronen Netzwerkansatz aus [4] (konkurrenzbasierter Zugriff) muss nun jedem Teilnehmer die Downlink-Nachricht separat mitgeteilt werden. Dies stellt gerade in großen Funknetzwerken, in denen es sehr viele Teilnehmer gibt, ein Problem dar, da bei sehr vielen Teilnehmern es sehr lange dauern würde, bis alle Teilnehmer die Daten erhalten haben.

In koordinierten Kommunikationssystemen ist möglich, in einer Bake (engl. beacon) eine Punkt-zu-Mehrpunkt-Nachricht (Multicast-Nachricht) von der Basisstation an die Teilnehmer zu signalisieren. Alle Teilnehmer, welche die Bake empfangen haben, können danach die entsprechenden Ressourcen der Multicast-Nachricht ebenfalls empfangen.

Die EP 1 521 394 A1 bezieht sich auf ein Verfahren zur Bereitstellung eines Multimedia-Broadcast/Multicast-Dienstes. Das Verfahren umfasst einen Schritt des Empfangens einer Multicast-Steuernachricht. Die Multicast-Steuernachricht kann Informationen zu einem oder mehreren der folgenden enthalten: eine Anzahl verfügbarer Multicast-Dienste, eine oder mehrere Ressourcenschwellenwerte für jeden verfügbaren Multicast-Dienst, eine oder mehrere Kennungen für jeden verfügbaren Multicast-Dienst, eine oder mehrere Funkzugangsfähigkeitsanforderungen für jeden verfügbaren Multicast-Dienst und/oder Benachrichtigung über die Beendigung und/oder Fortsetzung des Multicast-Dienstes. Abonnementinformationen, wie z. B. Multicast-Abonnementtyp, Zahlungsauthentifizierungsdaten und Abrechnungsinformationen, können übertragen werden und in Übereinstimmung mit der empfangenen Multicast-Steuernachricht sein. Als Reaktion auf die empfangene Multicast-Steuernachricht kann ein Multicast-Dienst ausgewählt werden. Sobald der Multicast-Dienst ausgewählt ist, können ein oder mehrere Signale entsprechend dem ausgewählten Multicast-Dienst übertragen werden.

Die EP 1 657 852 A1 bezieht sich auf einen Mechanismus zum Herstellen und Aufrechterhalten einer Kommunikation zwischen Knoten in einem drahtlosen Kommunikationssystem. Hierbei hört ein Zielknoten (A) periodisch auf einen Kommunikationskanal. Zum Anfordern von Diensten von dem Zielknoten (A) wird ein Aufwecksignal (WU) von einem Quellknoten (B) zu dem Zielknoten (A) über den Kommunikationskanal übertragen, wobei das Aufwecksignal (WU) gebildet ist durch eine Präambel (WP) und eine Information zum Steuern der Kommunikation zwischen Knoten. Die Dauer und der Inhalt des Aufwecksignals werden je nach Systembetriebskontext angepasst, um entweder Leerlaufzeiten, Stromverbrauch, Latenz oder Netzwerkblockierung (Kollisionsvermeidung) zu reduzieren.

Die US 2017/310497 A1 bezieht sich auf ein Multimedia Broadcast Multicast Service, MBMS, Empfangsverfahrer eines Endgeräts in einem mobilen Kommunikationssystem. Das Empfangsverfahren umfasst folgende Schritte: Empfangen von MBMS-Informationen, die wenigstens einen MBMS Service Area Identifier, SAI, aufweisen; wenn ein SAI einer Serving Cell durch die Serving Cell übermittelt wird, Empfangen des SAI der Serving Cell; Bestimmen, ob der SAI der Serving Cell einem der in den MBMS-Informationen enthaltenen MBMS SAI entspricht; wenn der SAI der Serving Cell einem der in den MBMS-Informationen enthaltenen MBMS SAI entspricht, Konfigurieren einer Zellenneuauswahlpriorität für die Serving Cell auf eine höchste Priorität; und wenn der SAI der Serving Cell nicht durch die Serving Cell übermittelt wird, Konfigurieren einer Zellenneuauswahlpriorität einer in den MBMS-Informationen enthaltenen Frequenz auf die höchste Priorität.

Der vorliegenden Erfindung liegt somit die Aufgabe zugrunde die Übertragung einer Punkt-zu-Mehrpunkt-Nachricht in einem Kommunikationssystem mit einer Vielzahl von unkoordiniert sendenden Teilnehmern zu ermöglichen.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Endpunkt eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei der Endpunkt ausgebildet ist, um eine Uplink-Datenübertragung zu einer Basisstation des Kommunikationssystems zu senden, wobei ein Sendezeitpunkt der Uplink-Datenübertragung von dem Endpunkt selbst bestimmt ist, wobei der Endpunkt ausgebildet ist, um nach einer vorgegeben Zeit nach der Uplink-Datenübertragung in einem vorgegebenen Zeitintervall eine Downlink-Datenübertragung von der Basisstation zu empfangen, wobei die Downlink-Datenübertragung eine Signalisierungsinformation aufweist, wobei der Endpunkt ausgebildet ist, um basierend auf der Signalisierungsinformation eine Punkt-zu-Mehrpunkt-Datenübertragung [z.B. Multicast-Datenübertragung] von der Basisstation zu empfangen.

Bei Ausführungsbeispielen kann die Signalisierungsinformation eine Information über einen Zeitpunkt der Punkt-zu-Mehrpunkt-Datenübertragung aufweisen.

Beispielsweise kann die Information über den Zeitpunkt ein absoluter Zeitpunkt, ein relativer Zeitpunkt [z.B. eine definierte Zeitspanne zwischen der Downlink-Datenübertragung und der Punkt-zu-Mehrpunkt-Datenübertragung] oder eine Information sein, von der der absolute oder relative Zeitpunkt abgeleitet werden kann, wie z.B. eine Anzahl von Taktzyklen eines Oszillators des Endpunkts.

Bei Ausführungsbeispielen kann die Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Beispielsweise kann die Information über den Frequenzkanal ein absoluter Frequenzkanal oder ein relativer Frequenzkanal [z.B. ein Abstand zwischen einem Frequenzkanal der Downlink-Datenübertragung und einem Frequenzkanal der Punkt-zu-Mehrpunkt-Datenübertragung] sein.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die Signalisierungsinformation ferner eine Information über das Zeit- und oder Frequenzsprungmuster aufweist.

Beispielsweise kann die Punkt-zu-Mehrpunkt-Datenübertragung eine Telegram-Splitting-basierte Datenübertragung sein. Bei einer Telegram-Splitting-basierten Datenübertragung werden die zu übertragenen Daten [z.B. [codierte] Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Information über den Zeitpunkt der Punkt-zu-Mehrpunkt-Datenübertragung eine definierte [z.B. gewollte oder absichtliche] Ungenauigkeit aufweisen, die mindestens so groß ist, dass eine empfängerseitige Synchronisation auf die Punkt-zu-Mehrpunkt-Datenübertragung zum Empfang der Punkt-zu-Mehrpunkt-Datenübertragung erforderlich ist, wobei der Endpunkt ausgebildet ist, um eine Synchronisation auf die Punkt-zu-Mehrpunkt-Datenübertragung durchzuführen, um die Punkt-zu-Mehrpunkt-Datenübertragung zu empfangen.

Bei Ausführungsbeispielen kann die definierte Ungenauigkeit im Bereich von 1 bis 10.000 Symboldauern liegen.

Bei Ausführungsbeispielen kann die definierte Ungenauigkeit in Abhängigkeit eines zeitlichen Abstands bis zur Punkt-zu-Mehrpunkt-Datenübertragung einer nichtlinearen Skalierung [z. B. eine logarithmische Skalierung] unterliegen, so dass die Ungenauigkeit mit steigendem Abstand bis zur Punkt-zu-Mehrpunkt-Datenübertragung größer ist.

Bei Ausführungsbeispielen kann die Downlink-Datenübertragung ferner eine Taktgeberkorrekturinformation [z. B Quarzoffset in ppm gilt für Zeitgeber und Frequenzgeber] zur Korrektur einer Taktabweichung eines Taktgebers des Endpunkts aufweisen, wobei der Endpunkt ausgebildet ist, um eine Taktabweichung des Taktgebers basierend auf der Taktgeberkorrekturinformation zu korrigieren.

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation einen Zeitraum oder Zeitpunkt [z.B. groben Zeitpunkt] für eine zweite Uplink-Datenübertragung [z.B. die auf die erste Uplink-Datenübertragung folgt] signalisiert, wobei der Endpunkt ausgebildet ist, um in dem signalisierten Zeitraum die zweite Uplink-Datenübertragung zu der Basisstation zu senden und um zeitlich synchronisiert zu der zweiten Uplink-Datenübertragung eine zweite Downlink-Datenübertragung von der Basisstation zu empfangen, wobei die zweite Downlink-Datenübertragung eine zweite Signalisierungsinformation aufweist, wobei der Endpunkt ausgebildet ist, um basierend auf der zweiten Signalisierungsinformation die Punkt-zu-Mehrpunkt-Datenübertragung [z.B. Multicast-Datenübertragung] zu Empfangen.

Bei Ausführungsbeispielen kann die zweite Signalisierungsinformation eine Information über einen Zeitpunkt der Punkt-zu-Mehrpunkt-Datenübertragung aufweisen.

Bei Ausführungsbeispielen kann die zweite Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die zweite Signalisierungsinformation ferner eine Information über das Zeit- und oder Frequenzsprungmuster aufweist.

Bei Ausführungsbeispielen kann der Endpunkt ausgebildet sein, um, falls die zweite Downlink-Datenübertragung nicht erfolgreich empfangen werden konnte [z.B. falls die zweite Downlink-Datenübertragung nicht erfolgte oder gestört war], eine dritte Uplink-Datenübertragung zu der Basisstation zu senden und um zeitlich synchronisiert zu der dritten Uplink-Datenübertragung eine dritte Downlink-Datenübertragung von der Basisstation zu empfangen, wobei die dritte Downlink-Datenübertragung eine dritte Signalisierungsinformation aufweist, wobei der Endpunkt ausgebildet ist, um basierend auf der dritten Signalisierungsinformation die Punkt-zu-Mehrpunkt-Datenübertragung [z.B. Multicast-Datenübertragung] zu Empfangen.

Bei Ausführungsbeispielen kann die erste Downlink-Datenübertragung oder die zweite Downlink-Datenübertragung ferner eine Taktgeberkorrekturinformation aufweisen, die eine Taktabweichung eines Taktgebers des Endpunkts in Bezug auf einen Referenztakt beschreibt, wobei der Endpunkt ausgebildet ist, um die Punkt-zu-Mehrpunkt-Datenübertragung unter Verwendung der Taktgeberkorrekturinformation zu empfangen [z.B. um eine Taktabweichung des Taktgebers basierend auf der Taktgeberkorrekturinformation für den Empfang der Punkt-zu-Mehrpunkt-Datenübertragung] zu korrigieren.

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation eine Information über einen groben Zeitpunkt der Punkt-zu-Mehrpunkt-Datenübertragung aufweist, [z.B. wobei die Information über den groben Zeitpunkt der Punkt-zu-Mehrpunkt-Datenübertragung für einen Empfang der Punkt-zu-Mehrpunkt-Datenübertragung zu ungenau ist], wobei der Endpunkt ausgebildet ist, um vor dem groben Zeitpunkt der Punkt-zu-Mehrpunkt-Datenübertragung eine vierte Uplink-Datenübertragung zu der Basisstation zu senden und um zeitlich synchronisiert zu der vierten Uplink-Datenübertragung eine vierte Downlink-Datenübertragung von der Basisstation zu empfangen, wobei die vierte Downlink-Datenübertragung eine vierte Signalisierungsinformation aufweist, wobei der Endpunkt ausgebildet ist, um basierend auf der vierten Signalisierungsinformation die Punkt-zu-Mehrpunkt-Datenübertragung [z.B. Multicast-Datenübertragung] zu Empfangen.

Bei Ausführungsbeispielen kann die vierte Signalisierungsinformation eine Information über einen Zeitpunkt der Punkt-zu-Mehrpunkt-Datenübertragung aufweisen.

Bei Ausführungsbeispielen kann die vierte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die vierte Signalisierungsinformation ferner eine Information über das Zeit- und oder Frequenzsprungmuster aufweist.

Bei Ausführungsbeispielen kann die erste Downlink-Datenübertragung oder die vierte Downlink-Datenübertragung ferner eine Taktgeberkorrekturinformation zur Korrektur einer Taktabweichung eines Taktgebers des Endpunkts aufweisen, wobei der Endpunkt ausgebildet ist, um eine Taktabweichung des Taktgebers basierend auf der Taktgeberkorrekturinformation zu korrigieren.

Bei Ausführungsbeispielen kann die Signalisierungsinformation eine erste Signalisierungsinformation sein, wobei die erste Signalisierungsinformation eine Information über einen Zeitpunkt eines Stützbakens aufweist, wobei der Endpunkt ausgebildet ist, um basierend auf der ersten Signalisierungsinformation den Stützbaken zu empfangen, wobei der Stützbaken eine fünfte Signalisierungsinformation aufweist, wobei der Endpunkt ausgebildet ist, um basierend auf der fünften Signalisierungsinformation die Punkt-zu-Mehrpunkt-Datenübertragung [z.B. Multicast-Datenübertragung] zu Empfangen.

Bei Ausführungsbeispielen kann die erste Signalisierungsinformation ferner eine Information über einen Frequenzkanal [z.B. des von dem Kommunikationssystem verwendeten Frequenzbands] oder einen Frequenzoffset des Stützbakens aufweisen.

Bei Ausführungsbeispielen kann die fünfte Signalisierungsinformation eine Information über einen Zeitpunkt der Punkt-zu-Mehrpunkt-Datenübertragung aufweisen.

Bei Ausführungsbeispielen kann die fünfte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die fünfte Signalisierungsinformation ferner eine Information über das Zeit- und oder Frequenzsprungmuster aufweist.

Bei Ausführungsbeispielen kann die Downlink-Datenübertragung oder der Stützbaken ferner eine Taktgeberkorrekturinformation zur Korrektur einer Taktabweichung eines Taktgebers des Endpunkts aufweisen, wobei der Endpunkt ausgebildet ist, um eine Taktabweichung des Taktgebers basierend auf der Taktgeberkorrekturinformation zu korrigieren.

Bei Ausführungsbeispielen kann der Endpunkt ausgebildet sein, um Daten asynchron zu anderen Endpunkten und/oder der Basisstation des Kommunikationssystems zu senden.

Beispielsweise kann der Endpunkt ausgebildet sein, um die Uplink-Datenübertragung asynchron zu der Basisstation zu senden.

Bei Ausführungsbeispielen kann der Endpunkt ausgebildet sein, um die Uplink-Datenübertragung zu einem zufälligen oder pseudozufälligen Zeitpunkt zu der Basisstation zu senden.

Bei Ausführungsbeispielen kann die Uplink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Uplink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Downlink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Downlink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden].

Bei Ausführungsbeispielen kann der Endpunkt ein Sensorknoten oder Aktorknoten sein.

Bei Ausführungsbeispielen kann der Endpunkt batteriebetrieben sein.

Bei Ausführungsbeispielen kann der Endpunkt ein Energy-Harvesting-Element zur elektrischen Energiegewinnung aufweisen.

Weitere Ausführungsbeispiele schaffen eine Basisstation eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei die Basisstation ausgebildet ist, um eine Uplink-Datenübertragung von einem Endpunkt des Kommunikationssystems zu empfangen, wobei ein Sendezeitpunkt der Uplink-Datenübertragung von dem Endpunkt selbst bestimmt ist, wobei die Basisstation ausgebildet ist, um nach einer vorgegeben Zeit nach der Uplink-Datenübertragung in einem vorgegebenen Zeitintervall eine Downlink-Datenübertragung zu dem Endpunkt zu senden, wobei die Downlink-Datenübertragung eine Signalisierungsinformation aufweist, wobei die Signalisierungsinformation eine nachfolgende Punkt-zu-Mehrpunkt-Datenübertragung oder eine der Punkt-zu-Mehrpunkt-Datenübertragung vorangehende weitere Datenübertragung signalisiert, wobei die Basisstation ausgebildet ist, um die Punkt-zu-Mehrpunkt-Datenübertragung entsprechend der Signalisierungsinformation zu einer Mehrzahl von Endpunkten des Kommunikationssystems, wobei der Endpunkt Teil der Mehrzahl von Endpunkten ist, zu senden.

Bei Ausführungsbeispielen kann die Signalisierungsinformation eine Information über einen Zeitpunkt der Punkt-zu-Mehrpunkt-Datenübertragung aufweisen.

Beispielsweise kann die Information über den Zeitpunkt ein absoluter Zeitpunkt, ein relativer Zeitpunkt [z.B. eine definierte Zeitspanne zwischen der Downlink-Datenübertragung und der Punkt-zu-Mehrpunkt-Datenübertragung] oder eine Information sein, von der der absolute oder relative Zeitpunkt abgeleitet werden kann, wie z.B. eine Anzahl von Taktzyklen eines Oszillators des Endpunkts.

Bei Ausführungsbeispielen kann die Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Beispielsweise kann die Information über den Frequenzkanal ein absoluter Frequenzkanal oder ein relativer Frequenzkanal [z.B. ein Abstand zwischen einem Frequenzkanal der Downlink-Datenübertragung und einem Frequenzkanal der Punkt-zu-Mehrpunkt-Datenübertragung] sein.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die Signalisierungsinformation ferner eine Information über das Zeit- und oder Frequenzsprungmuster aufweist.

Beispielsweise kann die Punkt-zu-Mehrpunkt-Datenübertragung eine Telegram-Splitting-basierte Datenübertragung sein. Bei einer Telegram-Splitting-basierten Datenübertragung werden die zu übertragenen Daten [z.B. [codierte] Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Information über den Zeitpunkt der Punkt-zu-Mehrpunkt-Datenübertragung eine definierte [z.B. gewollte oder absichtliche] Ungenauigkeit aufweisen, die mindestens so groß ist, dass eine empfängerseitige Synchronisation auf die Punkt-zu-Mehrpunkt-Datenübertragung zum Empfang der Punkt-zu-Mehrpunkt-Datenübertragung erforderlich ist.

Bei Ausführungsbeispielen kann die definierte Ungenauigkeit im Bereich von 1 bis 10.000 Symboldauern liegen.

Bei Ausführungsbeispielen kann die definierte Ungenauigkeit in Abhängigkeit eines zeitlichen Abstands bis zur Punkt-zu-Mehrpunkt-Datenübertragung einer nichtlinearen Skalierung unterliegen, so dass die Ungenauigkeit mit steigendem Abstand bis zur Punkt-zu-Mehrpunkt-Datenübertragung größer ist.

Bei Ausführungsbeispielen kann die Basisstation ausgebildet sein, um basierend auf der Uplink-Datenübertragung des Endpunkts eine Taktabweichung eines Taktgebers des Endpunkts zu ermitteln, wobei die Basisstation ausgebildet ist, um die Downlink-Datenübertragung mit einer Taktgeberkorrekturinformation zur Korrektur der Taktabweichung des Taktgebers des Endpunkts zu versehen.

Bei Ausführungsbeispielen kann die Basisstation ausgebildet sein, um basierend auf der Uplink-Datenübertragung des Endpunkts eine Taktabweichung eines Taktgebers des Endpunkts zu ermitteln, wobei die Information über den Zeitpunkt der Punkt-zu-Mehrpunkt Datenübertragung, die die Signalisierungsinformation aufweist, die Taktabweichung des Taktgebers des Endpunkts berücksichtigt [z.B. derart, dass die Taktabweichung des Taktgebers kompensiert wird], und/oder wobei die Information über den Frequenzkanal der Punkt-zu-Mehrpunkt-Datenübertragung, die die Signalisierungsinformation aufweist, die Taktabweichung des Taktgebers des Endpunkts berücksichtigt [z.B. derart, dass die Taktabweichung des Taktgebers kompensiert wird].

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation einen Zeitraum oder Zeitpunkt [z.B. groben Zeitpunkt] für eine zweite Uplink-Datenübertragung [z.B. die auf die erste Uplink-Datenübertragung folgt] signalisiert, wobei die Basisstation ausgebildet ist, um in dem signalisierten Zeitraum die zweite Uplink-Datenübertragung von dem Endpunkt zu empfangen und um zeitlich synchronisiert zu der zweiten Uplink-Datenübertragung eine zweite Downlink-Datenübertragung zu dem Endpunkt zu senden, wobei die zweite Downlink-Datenübertragung eine zweite Signalisierungsinformation aufweist, wobei die zweite Signalisierungsinformation die nachfolgende Punkt-zu-Mehrpunkt-Datenübertragung signalisiert, [z.B. wobei die zweite Uplink-Datenübertragung und/oder die zweite Downlink-Datenübertragung die weitere Datenübertragung ist], wobei die Basisstation ausgebildet ist, um die Punkt-zu-Mehrpunkt-Datenübertragung entsprechend der zweiten Signalisierungsinformation [z.B. zu einer Mehrzahl von Endpunkten des Kommunikationssystems, wobei der Endpunkt Teil der Mehrzahl von Endpunkten ist,] zu senden.

Bei Ausführungsbeispielen kann die zweite Signalisierungsinformation eine Information über einen Zeitpunkt der Punkt-zu-Mehrpunkt-Datenübertragung aufweisen.

Bei Ausführungsbeispielen kann die zweite Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die zweite Signalisierungsinformation ferner eine Information über das Zeit- und oder Frequenzsprungmuster aufweist.

Bei Ausführungsbeispielen kann die Basisstation ausgebildet sein, um basierend auf der zweiten Uplink-Datenübertragung des Endpunkts eine Taktabweichung eines Taktgebers des Endpunkts zu ermitteln, wobei die Basisstation ausgebildet ist, um die zweite Downlink-Datenübertragung mit einer Taktgeberkorrekturinformation zur Korrektur der Taktabweichung des Taktgebers des Endpunkts zu versehen.

Bei Ausführungsbeispielen kann die Basisstation ausgebildet sein, um basierend auf der ersten oder zweiten Uplink-Datenübertragung des Endpunkts eine Taktabweichung eines Taktgebers des Endpunkts zu ermitteln, wobei die Information über den Zeitpunkt der Punkt-zu-Mehrpunkt Datenübertragung, die die zweite Signalisierungsinformation aufweist, die Taktabweichung des Taktgebers des Endpunkts berücksichtigt [z.B. derart, dass die Taktabweichung des Taktgebers kompensiert wird].

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation eine Information über einen groben Zeitpunkt der Punkt-zu-Mehrpunkt-Datenübertragung aufweist, [z.B. wobei die Information über den groben Zeitpunkt der Punkt-zu-Mehrpunkt-Datenübertragung für einen Empfang der Punkt-zu-Mehrpunkt-Datenübertragung zu ungenau ist], wobei die Basisstation ausgebildet ist, um vor dem groben Zeitpunkt der Punkt-zu-Mehrpunkt-Datenübertragung eine vierte Uplink-Datenübertragung von dem Endpunkt zu empfangen und um zeitlich synchronisiert zu der vierten Uplink-Datenübertragung eine vierte Downlink-Datenübertragung zu dem Endpunkt zu senden, wobei die vierte Downlink-Datenübertragung eine vierte Signalisierungsinformation aufweist, wobei die vierte Signalisierungsinformation die nachfolgende Punkt-zu-Mehrpunkt-Datenübertragung signalisiert, [z.B. wobei die vierte Uplink-Datenübertragung und/oder die vierte Downlink-Datenübertragung die weitere Datenübertragung ist], wobei die Basisstation ausgebildet ist, um die Punkt-zu-Mehrpunkt-Datenübertragung entsprechend der vierten Signalisierungsinformation [z.B. zu einer Mehrzahl von Endpunkten des Kommunikationssystems, wobei der Endpunkt Teil der Mehrzahl von Endpunkten ist,] zu senden.

Bei Ausführungsbeispielen kann die vierte Signalisierungsinformation eine Information über einen Zeitpunkt der Punkt-zu-Mehrpunkt-Datenübertragung aufweisen.

Bei Ausführungsbeispielen kann die vierte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die vierte Signalisierungsinformation ferner eine Information über das Zeit- und oder Frequenzsprungmuster aufweist.

Bei Ausführungsbeispielen kann die Basisstation ausgebildet sein, um basierend auf der vierten Uplink-Datenübertragung des Endpunkts eine Taktabweichung eines Taktgebers des Endpunkts zu ermitteln, wobei die Basisstation ausgebildet ist, um die vierte Downlink-Datenübertragung mit einer Taktgeberkorrekturinformation zur Korrektur der Taktabweichung des Taktgebers des Endpunkts zu versehen.

Bei Ausführungsbeispielen kann die Basisstation ausgebildet sein, um basierend auf der vierten Uplink-Datenübertragung des Endpunkts eine Taktabweichung eines Taktgebers des Endpunkts zu ermitteln, wobei die Information über den Zeitpunkt der Punkt-zu-Mehrpunkt Datenübertragung, die die vierte Signalisierungsinformation aufweist, die Taktabweichung des Taktgebers des Endpunkts berücksichtigt [z.B. derart, dass die Taktabweichung des Taktgebers kompensiert wird], und/oder wobei die Information über den Frequenzkanal der Punkt-zu-Mehrpunkt Datenübertragung, die die vierte Signalisierungsinformation aufweist, die Taktabweichung des Taktgebers des Endpunkts berücksichtigt [z.B. derart, dass die Taktabweichung des Taktgebers kompensiert wird].

Bei Ausführungsbeispielen kann die Signalisierungsinformation eine erste Signalisierungsinformation sein, wobei die erste Signalisierungsinformation eine Information über einen Zeitpunkt eines Stützbakens aufweist, wobei die Basisstation ausgebildet ist, um den Stützbaken entsprechend der ersten Signalisierungsinformation [z.B. zu einer Mehrzahl von Endpunkten des Kommunikationssystems, wobei der Endpunkt Teil der Mehrzahl von Endpunkten ist,] zu senden, wobei der Stützenbaken eine fünfte Signalisierungsinformation aufweist, wobei die fünfte Signalisierungsinformation die nachfolgende Punkt-zu-Mehrpunkt-Datenübertragung signalisiert, [z.B. wobei der Stützbaken die weitere Datenübertragung ist].

Bei Ausführungsbeispielen kann die erste Signalisierungsinformation ferner eine Information über einen Frequenzkanal [z.B. des von dem Kommunikationssystem verwendeten Frequenzbands] des Stützbakens aufweisen.

Bei Ausführungsbeispielen kann die fünfte Signalisierungsinformation eine Information über einen Zeitpunkt der Punkt-zu-Mehrpunkt-Datenübertragung aufweisen.

Bei Ausführungsbeispielen kann die fünfte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die fünfte Signalisierungsinformation ferner eine Information über das Zeit- und oder Frequenzsprungmuster aufweist.

Bei Ausführungsbeispielen kann die Basisstation ausgebildet sein, um basierend auf der Uplink-Datenübertragung des Endpunkts eine Taktabweichung eines Taktgebers des Endpunkts zu ermitteln, wobei die Basisstation ausgebildet ist, um die Downlink-Datenübertragung oder den Stützbaken mit einer Taktgeberkorrekturinformation zur Korrektur der Taktabweichung des Taktgebers des Endpunkts zu versehen.

Bei Ausführungsbeispielen kann die Basisstation ausgebildet sein, um basierend auf der Uplink-Datenübertragung des Endpunkts eine Taktabweichung eines Taktgebers des Endpunkts zu ermitteln, wobei die Information über den Zeitpunkt der Punkt-zu-Mehrpunkt Datenübertragung, die die fünfte Signalisierungsinformation aufweist, die Taktabweichung des Taktgebers des Endpunkts berücksichtigt [z.B. derart, dass die Taktabweichung des Taktgebers kompensiert wird].

Weitere Ausführungsbeispiele schaffen ein Verfahren zum Betrieb eines Endpunkts eines Kommunikationssystems. Das Verfahren umfasst einen Schritt des Sendens einer Uplink-Datenübertragung zu einer Basisstation des Kommunikationssystems, wobei ein Sendezeitpunkt der Uplink-Datenübertragung von dem Endpunkt selbst bestimmt ist. Ferner umfasst das Verfahren einen Schritt des Empfangens einer Downlink-Datenübertragung von der Basisstation nach einer vorgegeben Zeit nach der Uplink-Datenübertragung in einem vorgegebenen Zeitintervall, wobei die Downlink-Datenübertragung eine Signalisierungsinformation aufweist. Ferner umfasst das Verfahren einen Schritt des Empfangens einer Punkt-zu-Mehrpunkt-Datenübertragung [z.B. Multicast-Datenübertragung] von der Basisstation basierend auf der Signalisierungsinformation.

Weitere Ausführungsbeispiele schaffen ein Verfahren zum Betrieb einer Basisstation eines Kommunikationssystems. Das Verfahren umfasst einen Schritt des Empfangens einer Uplink-Datenübertragung von einem Endpunkt des Kommunikationssystems, wobei ein Sendezeitpunkt der Uplink-Datenübertragung von dem Endpunkt selbst bestimmt ist. Ferner umfasst das Verfahren einen Schritt des Sendens einer Downlink-Datenübertragung zu dem Endpunktnach einer vorgegeben Zeit nach der Uplink-Datenübertragung in einem vorgegebenen Zeitintervall, wobei die Downlink-Datenübertragung eine Signalisierungsinformation aufweist, wobei die Signalisierungsinformation eine nachfolgende Punkt-zu-Mehrpunkt-Datenübertragung oder eine der Punkt-zu-Mehrpunkt-Datenübertragung vorangehende weitere Datenübertragung signalisiert. Ferner umfasst das Verfahren einen Schritt des Sendens der Punkt-zu-Mehrpunkt-Datenübertragung entsprechend der Signalisierungsinformation zu einer Mehrzahl von Endpunkten des Kommunikationssystems, wobei der Endpunkt Teil der Mehrzahl von Endpunkten ist.

Ausführungsbeispiele der vorliegenden Erfindung werden bezugnehmend auf die beiliegenden Figuren näher beschrieben. Es zeigen:
- Fig. 1: in einem Diagramm eine Belegung eines Frequenzbands eines TSMA-basierten Kommunikationssystems bei der Übertragung eines auf eine Mehrzahl von Sub-Datenpaketen aufgeteilten Datenpakets, wobei die Mehrzahl von Sub-Datenpaketen in der Zeit und Frequenz verteilt sind,
- Fig. 2: in einem Diagramm eine Belegung eines Frequenzbands eines konkurrenzbasierten Kommunikationssystems bei der Übertragung mehrerer Uplink-Nachrichten und mehrerer Downlink-Nachrichten,
- Fig. 3: eine schematische Ansicht eines Kommunikationssystems mit einer Basisstation und einem oder mehreren Teilnehmern sowie zweier anderer Kommunikationssysteme, gemäß einem Ausführungsbeispiel der vorliegenden Erfindung,
- Fig. 4: ein schematisches Blockschaltbild der Basisstation und eines der Teilnehmer des in Fig. 3 gezeigten Kommunikationssystems, gemäß einem Ausführungsbeispiel der vorliegenden Erfindung,
- Fig. 5: in einem Diagramm eine Belegung eines Frequenzbands des Kommunikationssystems bei der Durchführung mehrerer Uplink-Datenübertragungen und Downlink-Datenübertragungen zwischen der Basisstation und mehreren der Teilnehmer sowie einer Punkt-zu-Mehrpunkt-
- Fig. 6: Datenübertragung von der Basisstation zu mehreren der Teilnehmer, gemäß einem Ausführungsbeispiel der vorliegenden Erfindung, ein schematisches Blockschaltbild eines Teilnehmers und einer Basisstation, gemäß einem Ausführungsbeispiel der vorliegenden Erfindung,
- Fig. 7: in einem Diagramm eine Belegung des Frequenzbands des Kommunikationssystems bei der Durchführung einer Uplink-Datenübertragung, einer Downlink-Datenübertagung und einer Punkt-zu-Mehrpunkt-Datenübertragung, gemäß einem Ausführungsbeispiel der vorliegenden Erfindung,
- Fig. 8: in einem Diagramm eine Belegung des Frequenzbands des Kommunikationssystems bei der Durchführung einer ersten Uplink-Datenübertragung, einer ersten Downlink-Datenübertragung, einer zweiten Uplink-Datenübertragung, einer zweiten Downlink-Datenübertragung sowie einer Punkt-zu-Mehrpunkt-Datenübertragung, gemäß einem Ausführungsbeispiel der vorliegenden Erfindung,
- Fig. 9: in einem Diagramm eine Belegung des Frequenzbands des Kommunikationssystems bei der Durchführung einer Uplink-Datenübertragung, einer Downlink-Datenübertragung, einer Übertragung einer Stützbake als weitere Datenübertragung, und einer Punkt-zu-Mehrpunkt-Datenübertragung, gemäß einem Ausführungsbeispiel der vorliegenden Erfindung,
- Fig. 10: ein Flussdiagramm eines Verfahrens zum Betrieb eines Teilnehmers eines Kommunikationssystems, gemäß einem Ausführungsbeispiel der vorliegenden Erfindung, und
- Fig. 11: ein Flussdiagramm eines Verfahrens zum Betrieb einer Basisstation eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

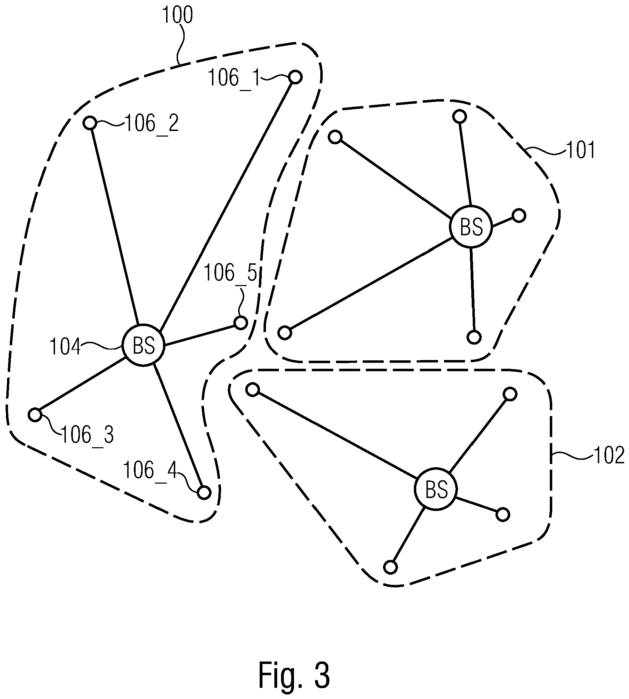

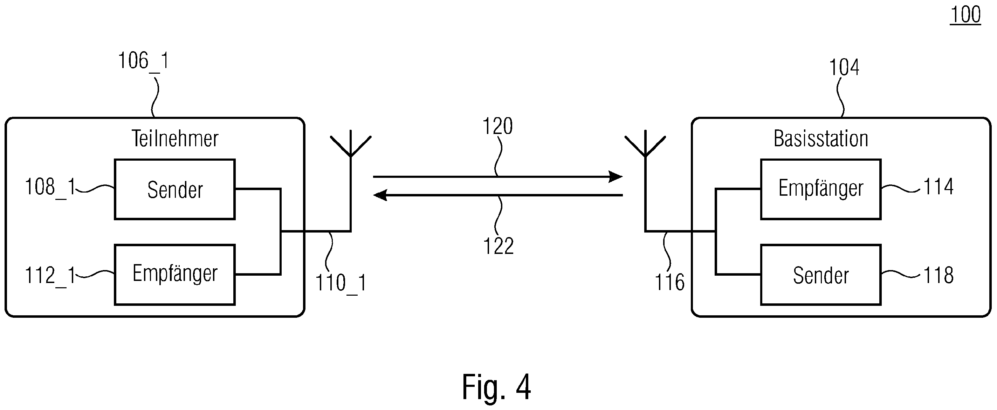

Bevor detaillierte Ausführungsbeispiele eines Teilnehmers (z.B. Endpunkts) und einer Basisstation näher beschrieben werden, wird zunächst das zugrundeliegende Kommunikationssystem, in dem der Teilnehmer bzw. die Basisstation eingesetzt werden können, anhand der Fig. 3 und 4 näher erläutert.

Fig. 3 zeigt eine schematische Ansicht eines Kommunikationssystems 100 sowie zweier anderer Kommunikationssysteme 101 und 102, gemäß einem Ausführungsbeispiel der vorliegenden Erfindung.

Das Kommunikationssystem 100 kann eine Basisstation 104 (oder optional mehrere Basisstationen) und ein oder mehrere Teilnehmer (z.B. Endpunkte) 106_1-106_n aufweisen, wobei n eine natürliche Zahl größer gleich eins ist. In dem in Fig. 3 gezeigten Ausführungsbeispiel weist das Kommunikationssystem 100 zur Veranschaulichung fünf Teilnehmer 106_1-106_5 auf, das Kommunikationssystem 104_1 kann jedoch genauso 1, 10, 100, 1.000, 10.000 oder sogar 100.000 Teilnehmer aufweisen.

Das Kommunikationssystem 100 kann ausgebildet sein, um in einem Frequenzband (z.B. einem lizenzfreien und/oder genehmigungsfreien Frequenzband, wie z.B. dem ISM Band) drahtlos zu kommunizieren, welches von einer Mehrzahl von untereinander unkoordinierten Kommunikationssystemen zur Kommunikation genutzt wird, wie dies in Fig. 3 beispielhaft durch die anderen Kommunikationssysteme 101 und 102 angedeutet ist.

Das von dem Kommunikationssystem 100 genutzte Frequenzband kann dabei eine wesentlich (z.B. um zumindest den Faktor 5 (oder 10)) größere Bandbreite aufweisen als Empfangsfilter der Empfänger (Receiver oder Transceiver) der Teilnehmer 106_1-106_n. Die Teilnehmer 106_1-106_n des Kommunikationssystems 100 können ausgebildet sein, um Daten unkoordiniert (z.B. und asynchron) in Bezug auf andere Teilnehmer und/oder die Basisstation 104 des Kommunikationssystems 100 zu senden. Beispielsweise können die Teilnehmer 106_1-106_n ausgebildet sein, um Daten in vorgegebenen groben Abständen (z.B. stündlich, täglich, wöchentlich, halbjährlich, jährlich, usw.) oder ansprechend auf ein externes Ereignis (z.B. Abweichung eines Sensorwertes von einem Sollwert) zu senden. Hierbei wird der genaue Sendezeitpunkt zur Übertragung der Daten von dem jeweiligen Teilnehmer selbst bestimmt. Es kann auch zusätzlich die genaue Frequenz bzw. der genaue Frequenzkanal des Frequenzbands zur Übertragung der Daten von dem jeweiligen Teilnehmer selbst bestimmt werden. Der jeweilige Teilnehmer sendet die Daten hierbei unabhängig davon, ob ein anderer Teilnehmer und/oder die Basisstation 104 zum selben Zeitpunkt oder zeitlich überlappend und/oder auf derselben Frequenz bzw. demselben Frequenzkanal des Frequenzbands Daten überträgt.

Die Übertragung von Daten (z.B. eines Datenpakets) von einem der Teilnehmer 106_1-106_n, z.B. von dem Teilnehmer 106_1, zu der Basisstation 104 wird hierbei als Uplink-Datenübertragung bezeichnet, während die Übertragung von Daten von der Basisstation 104 zu einem der Teilnehmer 106_1-106_n, z.B. zu dem Teilnehmer 106_1, als Downlink-Datenübertragung bezeichnet wird. Die Uplink-Datenübertragung bezeichnet (oder umfasst) demnach die Übertragung eines Uplink-Datenpakets (bzw. einer Uplink-Nachricht) von dem jeweiligen Teilnehmer zu der Basisstation 104, während die Downlink-Datenübertragung die Übertragung eines Downlink-Datenpakets (bzw. einer Downlink-Nachricht) von der Basisstation 104 zu dem jeweiligen Teilnehmer bezeichnet (oder umfasst).

Da die Uplink-Datenübertragung des jeweiligen Teilnehmers 106_1-106_n unkoordiniert erfolgt und die Sendeempfängereinheit (Transceiver) des jeweiligen Teilnehmers 106_1-106_n in der Regel nur zur Datenübertragung aktiviert wird, erfolgt die Downlink-Datenübertragung zu dem jeweiligen Teilnehmer zeitlich synchronisiert zu der Uplink-Datenübertragung, d.h. nach einer vorgegebenen Zeit und/oder Frequenz nach der Uplink-Datenübertragung aktiviert der jeweilige Teilnehmer seine Sendeempfängereinheit (Transceiver) für ein vorgegebenes Zeitintervall (Empfangsfenster), um die Downlink-Datenübertragung zu empfangen, die von der Basisstation 104 ansprechend (z.B. in Reaktion auf) auf die Uplink-Datenübertragung genau innerhalb dieses Zeitintervalls gesendet wird. Optional kann die Downlink-Datenübertragung zu dem jeweiligen Teilnehmer auch in der Frequenz synchronisiert zu der jeweiligen Uplink-Datenübertragung sein, wie z.B. auf der gleichen Frequenz (im gleichen Frequenzkanal) oder mit einem vorgegebenen Frequenzabstand.

Dies hat den Vorteil, dass die Teilnehmer 106_1-106_n ihre Sendeempfängereinheiten (Transceiver) nur für die jeweilige Datenübertragung (Uplink-Datenübertragung und/oder Downlink-Datenübertragung) aktivieren (z.B. in einen normalen Betriebsmodus) müssen, während die Sendeempfängereinheiten für die übrige Zeit deaktiviert (z.B. in einen Energiesparmodus versetzt) werden können, um Energie zu sparen. Dies ist insbesondere dann von Vorteil, wenn dem jeweiligen Teilnehmer nur begrenzte Energieressourcen zur Verfügung stehen, beispielsweise da dieser batteriebetrieben ist oder Energie mittels eines Energy-Harvesting-Elements aus der Umgebung bezieht.

Die Teilnehmer 106_1-106_n des Kommunikationssystems 100 können beispielsweise Aktorknoten und/oder Sensorknoten, wie z.B. Heizungszähler, Bewegungsmelder, Rauchmelder, usw., sein.

Optional können die Basisstation 104 und die Teilnehmer 106_1-106_n des Kommunikationssystems 100 ausgebildet sein, um Daten basierend auf dem Telegram-Splitting-Verfahren (dt. Telegrammaufteilungsverfahren) zu übertragen. Hierbei werden auf Datensenderseite die zu übertragenen Daten, wie z.B. ein Telegramm bzw. Datenpaket (z.B. der physikalischen Schicht im OSI-Modell), beispielsweise ein Uplink-Datenpaket oder ein Downlink-Datenpaket, auf eine Mehrzahl von Sub-Datenpaketen (oder Teil-Datenpaketen) aufgeteilt und die Sub-Datenpakete nicht zusammenhängend, sondern entsprechend eines Zeit- und/oder Frequenzsprungmusters in der Zeit und/oder in der Frequenz verteilt übertragen, wobei auf Datenempfängerseite die Sub-Datenpakete wieder zusammenfügt (oder kombiniert) werden, um das Datenpaket zu erhalten. Jedes der Sub-Datenpakete enthält dabei nur einen Teil des Datenpakets. Das Datenpaket kann ferner codiert (z.B. kanalcodiert oder fehlerschutzcodiert) sein, so dass zum fehlerfreien Decodieren des Datenpakets nicht alle Sub-Datenpakete, sondern nur ein Teil der Sub-Datenpakete erforderlich ist.

Die Verteilung der Mehrzahl von Sub-Datenpaketen in der Zeit- und/oder Frequenz kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpaketes auch sowohl in der Zeit- als auch in der Frequenz verteilt übertragen werden. Die Verteilung der Mehrzahl von Sub-Datenpaketen in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

Eine Bandbreite der durch das Frequenzsprungmuster angegebene Belegung des Frequenzbands kann dabei wesentlich (z.B. zumindest um den Faktor 5 (oder 10) größer sein als eine Bandbreite der Empfangsfilter der Empfänger (Receiver oder Transceiver) der Teilnehmer 106_1-106_n. Zum Empfangen einer Telegram-Splitting-basierten Datenübertragung kann der jeweilige Teilnehmer daher ausgebildet sein, um die Empfangsfrequenz seines Empfängers basierend auf dem Frequenzsprungmuster (z.B. zu den jeweiligen durch das Zeitsprungmuster angegebenen Zeiten oder Zeitschlitzen) auf die jeweiligen durch das Frequenzsprungmuster angegebenen Frequenzen oder Frequenzkanäle des Frequenzbands umzuschalten, um die Mehrzahl von Sub-Datenpaketen zu empfangen.

Fig. 4 zeigt ein schematisches Blockschaltbild der Basisstation 104 und eines der Teilnehmer 106_1-106_n des in Fig. 3 gezeigten Kommunikationssystems 100, gemäß einem Ausführungsbeispiel der vorliegenden Erfindung.

Der Teilnehmer 106_1 kann einen Sender (bzw. Sendemodul; Transmitter) 108_1 aufweisen, der ausgebildet ist, um die Uplink-Datenübertragung 120 zu der Basisstation 104 zu senden. Der Sender 108_1 kann mit einer Antenne 110_1 des Teilnehmers 106_1 verbunden sein. Der Teilnehmer 106_1 kann ferner einen Empfänger (bzw. Empfangsmodul; Receiver) 112_1 aufweisen, der ausgebildet ist, um die Downlink-Datenübertragung 122 von der Basisstation 104 zu empfangen. Der Empfänger 112_1 kann mit der Antenne 110_1 oder einer weiteren Antenne des Teilnehmers 106_1 verbunden sein. Der Teilnehmer 106_1 kann auch einen kombinierten Sendeempfänger (bzw. Sendeempfangsmodul; Transceiver) aufweisen.

Die Basisstation 104 kann einen Empfänger (bzw. Empfangsmodul; Receiver) 114 aufweisen, der ausgebildet ist, um die Uplink-Datenübertragung 120 von dem Teilnehmer 106_1 zu empfangen. Der Empfänger 114 kann mit einer Antenne 116 der Basisstation 104 verbunden sein. Die Basisstation 104 kann ferner einen Sender (bzw. Sendemodul; Transmitter) 118 aufweisen, der ausgebildet ist, um die Downlink-Datenübertragung 122 zu dem Teilnehmer 106_1 zu senden. Der Sender 118 kann mit der Antenne 116 oder einer weiteren Antenne der Basisstation 104 verbunden sein. Die Basisstation 104 kann auch einen kombinierten Sendeempfänger (bzw. Sendeempfangsmodul; Transceiver) aufweisen.

Das in Bezug auf Fig. 3 und 4 beschriebene Kommunikationssystem 100 kann beispielsweise ein LPWAN (LPWAN = Low Power Wide Area Network, dt. Niedrigenergieweitverkehrnetzwerk) sein, wie es zum Beispiel im Standard ETSI TS 103 357 [4] definiert ist.

Im Folgenden werden Ausführungsbeispiele eines Teilnehmers 106_1 und einer Basisstation 104 beschrieben, die z.B. in dem oben in Bezug auf die Fig. 3 und 4 beschriebenen Kommunikationssystem 100 eingesetzt werden können. Natürlich können die nachfolgend beschriebenen Ausführungsbeispiele des Teilnehmers 106_1 und/oder der Basisstation 104 auch in anderen Kommunikationssystemen mit nicht koordiniert sendenden Teilnehmern umgesetzt bzw. implementiert werden.

### 1. Sianalisieruna einer Multicast-Nachricht in nicht koordinierten Netzen

Die nachfolgend beschriebenen Ausführungsbeispiele ermöglichen es, in unkoordinierten Kommunikationssystemen 100, in denen die Teilnehmer 106_1-106_n Daten asynchron an die Basisstation 104 übertragen, eine Multicast-Nachricht (Punkt-zu-Mehrpunkt-Datenübertragung) von der Basisstation 104 an die Teilnehmer 106_1-106_n oder einen Teil (echte Teilmenge) der Teilnehmer 106_1-106_n umzusetzen.

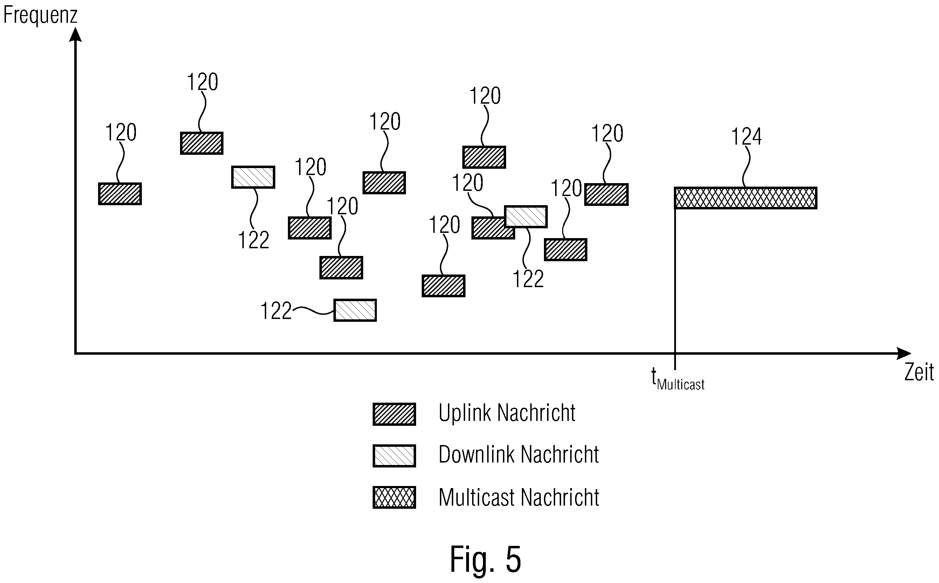

Dies könnte beispielsweise wie in Fig. 5 gezeigt umgesetzt werden, wobei während der Aussendung der Multicast-Nachricht (Punkt-zu-Mehrpunkt-Datenübertragung) 124 vorzugsweise keine anderen (z.B. die Punkt-zu-Mehrpunkt-Datenübertragung 124 überlappende/überlagernde) Datenübertragungen (z.B. Uplink-Datenübertragungen 120 und/oder Downlink-Datenübertragungen 122) stattfinden.

Im Detail zeigt Fig. 5 in einem Diagramm eine Belegung eines Frequenzbands des Kommunikationssystems 100 bei der Durchführung mehrerer Uplink-Datenübertragungen 120 und Downlink-Datenübertragungen 122 zwischen der Basisstation 104 und mehreren der Teilnehmer 106_1-106_n sowie einer Punkt-zu-Mehrpunkt-Datenübertragung 124 von der Basisstation 104 zu mehreren der Teilnehmer 106_1-106_n, gemäß einem Ausführungsbeispiel der vorliegenden Erfindung. Dabei beschreibt in Fig. 5 die Ordinate die Frequenz und die Abszisse die Zeit. Mit anderen Worten, Fig. 5 zeigt ein Beispiel einer Multicast-Nachricht (Punkt-zu-Mehrpunkt-Datenübertagung) 124 in einem nicht koordinierten Kommunikationssystem.

Damit eine solche Multicast-Nachricht (Punkt-zu-Mehrpunkt-Datenübertagung) 124 nach Fig. 5 von den Teilnehmern 106_1-106_n bzw. einer Teilmenge der Teilnehmer 106_1-106_n des Kommunikationssystems 100 empfangen werden kann, erfolgt bei Ausführungsbeispielen eine Signalisierung des Zeitpunktes t_{multicast} der Punkt-zu-Mehrpunkt-Datenübertragung 124 oder einer anderen Information, basierend auf derer die Teilnehmer 106_1-106_n die Punkt-zu-Mehrpunkt-Datenübertragung 124 empfangen können, wie dies im Folgenden ausgeführt wird.

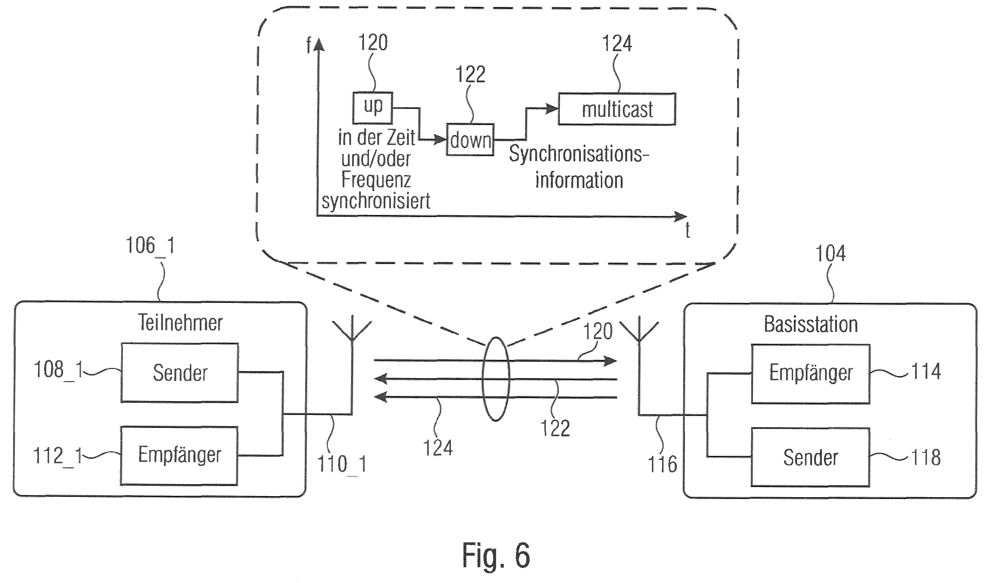

Fig. 6 zeigt ein schematisches Blockschaltbild eines Teilnehmers 106_1 und einer Basisstation 104, gemäß einem Ausführungsbeispiel der vorliegenden Erfindung.

Der Teilnehmer 106_1 (z.B. Endpunkt) kann ausgebildet sein, um Daten unkoordiniert in Bezug auf die Basisstation 104 und/oder andere Teilnehmer des Kommunikationssystems 100 (vgl. Fig. 3) zu senden.

Der Teilnehmer 106_1 kann ferner ausgebildet sein, um eine Uplink-Datenübertragung 120 zu der Basisstation 104 zu senden, und um zeitlich synchronisiert zu der Uplink-Datenübertragung 120 eine Downlink-Datenübertragung 122 von der Basisstation 104 zu empfangen, wobei die Downlink-Datenübertragung 122 eine Signalisierungsinformation aufweist, wobei die Signalisierungsinformation eine nachfolgende Punkt-zu-Mehrpunkt-Datenübertragung 124 der Basisstation 104 und/oder eine der Punkt-zu-Mehrpunkt-Datenübertragung 124 vorangehende weitere Datenübertragung (z.B. eine die Punkt-zu-Mehrpunkt-Datenübertragung vorbereitende Datenübertragung) anzeigt bzw. signalisiert.

Der Teilnehmer 106_1 kann ferner ausgebildet sein, um basierend auf der Signalisierungsinformation die Punkt-zu-Mehrpunkt-Datenübertragung (z.B. Multicast-Datenübertragung) 124 von der Basisstation 104 zu empfangen.

Die Basisstation 104 kann ausgebildet sein, um die Uplink-Datenübertragung 120 von dem Teilnehmer 106_1 zu empfangen, und um zeitlich synchronisiert zu der empfangenen Uplink-Datenübertragung 120 die Downlink-Datenübertragung 122 zu dem Teilnehmer 106_1 zu senden, wobei die Downlink-Datenübertragung 122 die Signalisierungsinformation aufweist, wobei die Signalisierungsinformation die nachfolgende Punkt-zu-Mehrpunkt-Datenübertragung 124 der Basisstation 104 und/oder die der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigt bzw. signalisiert.

Die Basisstation 104 kann ferner ausgebildet sein, um die Punkt-zu-Mehrpunkt-Datenübertragung 124 entsprechend der Signalisierungsinformation zu dem Teilnehmer 160 (z.B. und zu einem oder mehreren anderen Teilnehmern des Kommunikationssystems 100) zu senden.

Bei Ausführungsbeispielen kann die Signalisierungsinformation eine Information über einen Zeitpunkt der Punkt-zu-Mehrpunkt-Datenübertragung 124 aufweisen. Beispielsweise kann die Information über den Zeitpunkt ein absoluter Zeitpunkt, ein relativer Zeitpunkt (z.B. eine definierte Zeitspanne zwischen der Downlink-Datenübertragung 122 und der Punkt-zu-Mehrpunkt-Datenübertragung 124) oder eine Information sein, von der der absolute oder relative Zeitpunkt abgeleitet werden kann, wie z.B. eine Anzahl von Taktzyklen eines Taktgebers (Oszillators) des Teilnehmers.

Bei Ausführungsbeispielen kann die Signalisierungsinformation zusätzlich oder alternativ eine Information über eine Frequenz oder einen Frequenzkanal (z.B. des von dem Kommunikationssystem verwendeten Frequenzbands) der Punkt-zu-Mehrpunkt-Datenübertragung 124 aufweisen. Beispielsweise kann die Information über die Frequenz eine absolute Frequenz oder eine relative Frequenz (z.B. ein Abstand zwischen einer Frequenz der Downlink-Datenübertragung 122 und einer Frequenz der Punkt-zu-Mehrpunkt-Datenübertragung 124 sein). Beispielsweise kann die Information über den Frequenzkanal ein absoluter Frequenzkanal oder ein relativer Frequenzkanal (z.B. ein Abstand zwischen einem Frequenzkanal der Downlink-Datenübertragung 120 und einem Frequenzkanal der Punkt-zu-Mehrpunkt-Datenübertragung 124 sein).

Bei Ausführungsbeispielen kann die Punkt-zu-Mehrpunkt-Datenübertragung 124 eine Mehrzahl von Sub-Datenpaketen aufweisen, die in der Zeit- und oder Frequenz entsprechend eines Zeit- und/oder Frequenzsprungmusters verteilt übertragen werden (Telegramm-Splitting-Übertragungsverfahren). In diesem Fall kann die Signalisierungsinformation ferner eine Information über das Zeit- und oder Frequenzsprungmuster der Punkt-zu-Mehrpunkt-Datenübertragung 124 aufweisen. Beispielsweise kann die Punkt-zu-Mehrpunkt-Datenübertragung 124 eine Telegram-Splitting-basierte Datenübertragung sein. Bei einer Telegram-Splitting-basierten Datenübertragung werden die zu übertragenen Daten (z.B. (codierte) Nutzdaten der physikalischen Schicht) auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Im Folgenden werden detaillierte Ausführungsbeispiele des Teilnehmers 106_1 und der Basisstation 104 näher beschrieben.

### 1.1 Sianalisieruna im vorherigen Downlink-Paket

Typischerweise werden von der Basisstation 104 an die Teilnehmer 106_1-106_n neben Nachrichten, welche für mehrere Teilnehmer 106_1-106_n bestimmt sind, auch individuelle Informationen übertragen, z.B. eine authentisierte Bestätigung oder eine Änderung von Parametern des jeweiligen Teilnehmers. Da diese individuell für jeden Teilnehmer sind, muss ein individueller Downlink übertragen werden.

An diesem Punkt setzten Ausführungsbeispiele der vorliegenden Erfindung an, indem der individuell übertragenen Downlink-Nachricht (Downlink-Datenübertragung) 122 der Sendezeitpunkt der folgenden Multicast-Nachricht (Punkt-zu-Mehrpunkt-Datenübertragung) 124 angehängt wird.

Stehen mehrere Frequenzkanäle zur Verfügung, kann neben der Signalisierung des Sendezeitpunktes ebenfalls die Information über den Sendekanal hinzugefügt (z.B. signalisiert) werden.

Durch diese Signalisierung ist nun einem Teilnehmer der Zeitpunkt und ggf. der Frequenzkanal der anstehenden Multicast-Nachricht (Punkt-zu-Mehrpunkt-Datenübertragung) 124 bekannt. Weitere Teilnehmer können mit Hilfe des gleichen Verfahrens ebenfalls auf die Multicast-Nachricht (Punkt-zu-Mehrpunkt-Datenübertragung) 124 synchronisiert werden.

Liegen keine individuell an den Teilnehmer zu sendenden Daten vor, kann in diesem Fall auch nur der Zeitpunkt und ggf. der Frequenzkanal in der anstehenden Downlink-Nachricht (Downlink-Datenübertragung) 124 übertragen werden.

Dieses Verfahren besitzt den Vorteil, dass exakt nur den Teilnehmern (der Mehrzahl von Teilnehmern 106_1-106_n des Kommunikationssystems 100), von denen die Multicast-Nachricht (Punkt-zu-Mehrpunkt-Datenübertragung) 124 empfangen soll, der Zeitpunkt und ggf. der Frequenzkanal mitgeteilt wird. Somit entsteht für die Teilnehmer, welche die Multicast-Nachricht (Punkt-zu-Mehrpunkt-Datenübertragung) 124 nicht empfangen sollen, kein zusätzlicher, den Batterieverbrauch erhöhender Aufwand.

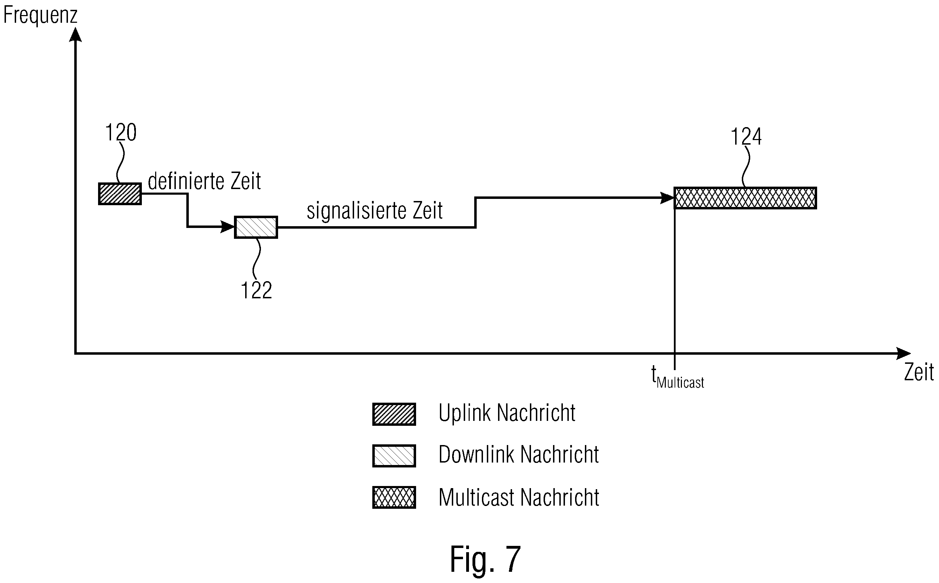

Fig. 7 zeigt den Ablauf der Signalisierung der Multicast-Nachricht (Punkt-zu-Mehrpunkt-Datenübertragung) 124 von der Uplink-Nachricht (Uplink-Datenübertragung) 120 bis zur eigentlichen Multicast-Nachricht (Punkt-zu-Mehrpunkt-Datenübertragung) 124 beispielhaft für einen Teilnehmer eines unkoordinierten Funknetzes (Kommunikationssystems) 100.

Im Detail zeigt Fig. 7 in einem Diagramm eine Belegung des Frequenzbands des Kommunikationssystems 100 bei der Durchführung einer Uplink-Datenübertragung 120, einer Downlink-Datenübertagung 122 und einer Punkt-zu-Mehrpunkt-Datenübertragung 124, gemäß einem Ausführungsbeispiel der vorliegenden Erfindung. Dabei beschreibt in Fig. 7 die Ordinate die Frequenz und die Abszisse die Zeit.

Wie in Fig. 7 zu erkennen ist, erfolgt die Downlink-Datenübertragung 122 zeitlich synchronisiert zu der Uplink-Datenübertragung 120, z.B. nach einer vorgegebenen (definierten) Zeit nach der Uplink-Datenübertragung 120. Die Downlink-Datenübertragung 122 weist eine Signalisierungsinformation auf, die die nachfolgende Punkt-zu-Mehrpunkt-Datenübertragung 124 anzeigt bzw. signalisiert.

Die Signalisierungsinformation kann beispielsweise, wie dies in Fig. 7 angedeutet ist, eine Information über einen Zeitpunkt der Punkt-zu-Mehrpunkt-Datenübertragung 124 aufweisen. Natürlich kann die Signalisierungsinformation auch zusätzlich oder alternativ eine Information über eine Frequenz oder einen Frequenzkanal der Punkt-zu-Mehrpunkt-Datenübertragung 124 aufweisen.

Bei Ausführungsbeispielen kann die Signalisierungsinformation, sofern die Punkt-zu-Mehrpunkt-Datenübertragung 124 basierend auf dem Telegram-Splitting-Übertragungsverfahren (TSMA, Telegram Splitting Multiple Access) übertragen wird, eine Information über das Zeit- und/oder Frequenzsprungmuster der Punkt-zu-Mehrpunkt-Datenübertragung 124 aufweisen.

Mit anderen Worten, wird TSMA für die Übertragung der Multicast-Nachricht (Punkt-zu-Mehrpunkt-Datenübertragung) 124 eingesetzt, kann zusätzlich noch das Sprungmuster (Zeit und/oder Frequenzspurngmuster) signalisiert werden, falls dies nicht global vorab definiert wurde.

Bei Ausführungsbeispielen kann somit einem individuell generierten Downlink-Datenpaket (z.B. der Downlink-Datenübertragung 120) zu einem Teilnehmer die Information über den Sendezeitpunkt und/oder Sendekanal (Sendefrequenz) und/oder das Sprungmuster (nur bei TSMA) angehängt werden.

In [4] wurde eine sog. authentisierte Aufwach- und/oder Authentisierungsnachricht im Downlink definiert. Mit Hilfe dieser Nachricht kann die Basisstation 104 individuell einem Teilnehmer eine Bestätigung der vorrausgehenden Uplink-Nachricht schicken. Falls weitere individuelle Daten für den Teilnehmer vorliegen, wird in dieser Nachricht ebenfalls die Länge dieser Daten und der Abstand zwischen der Nachricht und den folgenden Daten signalisiert. Liegt nun eine Signalisierung einer Multicast-Nachricht an einen Teilnehmer an und es liegen keine weiteren individuellen Daten für den Teilnehmer vor, kann nur für die Signalisierung der Multicast-Nachricht die zusätzliche Übertragung neben dem Aufwach- und Authentisierungsnachricht verwendet werden.

Im Falle einer reinen Signalisierung einer Multicast-Nachricht (Punkt-zu-Mehrpunkt-Datenübertragung) 124, können die Felder, welche die Zusatzinformationen für die folgenden Daten (Längen- und Zeitinformation bzw. PSI und TSI in [4]) enthalten, auch für die direkte Signalisierung der Multicast-Nachricht (Punkt-zu-Mehrpunkt-Datenübertragung) 124 (Zeit, Frequenz, Länge, usw.) eingesetzt werden. Hierdurch reduziert sich der Overhead welcher für die separate Übertragung neben der Aufwach- und Authentisierungsnachricht nötig wäre.

Bei Ausführungsbeispielen können zur Verfügung stehende Felder in einer Aufwach- und/oder Authentisierungsnachricht (Downlink-Datenübertragung nach [4]) bei reiner Signalisierung einer Multicast-Nachricht (Punkt-zu-Mehrpunkt-Datenübertragung) 124 dafür verwendet werden.

### 1.2 Grobe Zeit-Signalisierung

Oftmals dauert es längere Zeit bis nach Abschnitt 1.1 alle notwendigen Teilnehmer über die vorherstehende Multicast-Nachricht (Punkt-zu-Mehrpunkt-Datenübertragung) 124 informiert worden sind. Gerade bei denjenigen Teilnehmern, welche sehr früh über die anstehende Multicast-Nachricht (Punkt-zu-Mehrpunkt-Datenübertragung) 124 informiert werden, muss eine sehr große Zeitdifferenz signalisiert werden. Um diese entsprechend fein auflösen zu können, sind entsprechend viele Bits nötig, welche zu übertragen sind. Bei Teilnehmern, welche (zeitlich) sehr nahe an der eigentlichen Multicast-Nachricht (Punkt-zu-Mehrpunkt-Datenübertragung) 124 darüber informiert werden, sind bei gleicher Auflösung die oberen Stellen der Bits des Datenfeldes in der Signalisierung Null.

Daraus folgt, dass abhängig von der (zeitlichen) Differenz zwischen Signalisierung und der Multicast-Nachricht (Punkt-zu-Mehrpunkt-Datenübertragung) 124 eine unterschiedlich lange Sequenz zur Signalisierung sinnvoll wäre.

Wird jedoch einen realer Teilnehmer betrachtet, welcher einen Quarz aufweist, dann zeigt sich, dass die Ungenauigkeit des Zeitpunktes, wann der Teilnehmer die Multicast-Nachricht (Punkt-zu-Mehrpunkt-Datenübertragung) 124 erwartet, ebenfalls abhängig von der Differenzzeit zwischen Signalisierung und der Multicast-Nachricht (Punkt-zu-Mehrpunkt-Datenübertragung) 124 ist.

Umso länger diese Differenz ist, umso ungenauer ist auch der Zeitpunkt welchen der Teilnehmer für die Multicast-Nachricht (Punkt-zu-Mehrpunkt-Datenübertragung) 124 annimmt. Umso ungenauer dieser Zeitpunkt ist, umso größer wählt der Teilnehmer den Suchbereich für die Multicast-Nachricht (Punkt-zu-Mehrpunkt-Datenübertragung) 124. Liegt der Suchbereich deutlich über der Auflösung des übertragenen Zeitpunktes der Multicast-Nachricht (Punkt-zu-Mehrpunkt-Datenübertragung) 124, kann die Auflösung geringer (und damit mehr Unsicherheit) gewählt werden, ohne den Suchbereich (im schlimmsten Fall addieren sich der Quarzfehler und der Auflösungsfehler) drastisch zu erhöhen.

Typische Werte für eine Ungenauigkeit bei der Signalisierung liegen im Bereich von 1 Symbol (z.B. Symboldauern) bis zu 10.000 Symbolen (z.B. Symboldauern).

Höhere Werte als 10.000 Symbole (z.B. Symboldauern) haben eine zu große Ungenauigkeit und würden eine sehr umfangreiche Nachsynchronisation erfordern.

Wichtig ist hier festzuhalten, dass bei idealen Timings die Unsicherheit noch so groß ist, dass ein Empfang ohne Nachsynchronisation nicht möglich wäre.

Bei Ausführungsbeispielen kann die Auflösung der Signalisierung eine gewisse Ungenauigkeit aufweisen, welche im Rahmen der Nachsynchronisation ermittelt werden kann.

Anstelle oder in Kombination mit der groben Signalisierung des Zeitpunktes kann auch eine nichtlineare Skalierung des Zeitpunktes gewählt werden, z.B. eine logarithmische Skalierung. Dies hat den Vorteil, dass Zeitpunkte, die nahe an der anstehenden Multicast-Nachricht (Punkt-zu-Mehrpunkt-Datenübertragung) 124 liegen, eine genauere Auflösung besitzen als Zeitpunkte, die noch weiter in der Ferne liegen. Dies ist nach den obigen Ausführungen jedoch unkritisch, da durch Quarzoffsets (z.B. Frequenzoffsets der Quarze) die Ungenauigkeiten mit steigendem (zeitlichen) Abstand zur Multicast-Nachricht (Punkt-zu-Mehrpunkt-Datenübertragung) 124 ansteigen. Somit kann auch die Auflösung entsprechend ungenauer werden, desto weiter der Zeitpunkt der Multicast-Nachricht (Punkt-zu-Mehrpunkt-Datenübertragung) 124 in der Zukunft liegt.

Bei Ausführungsbeispielen kann die Auflösung der Signalisierung eine nichtlineare Skalierung aufweisen.

### 1.3 Sianalisieruna einer weiteren Uplink-Nachricht

Typischerweise wird für die Signalisierung des Zeitpunktes der Multicast-Nachricht (Punkt-zu-Mehrpunkt-Datenübertagung) 124 nach Abschnitt 1.1 oder Abschnitt 1.2 eine Variable mit beispielsweise 16 Bit übertragen. Bei einer beispielhaft gewählten Quantisierung von 1 s pro LSB (Least Significant Bit, dt. niederwertigstes Bits) ergibt sich somit eine maximale Differenz zwischen der Signalisierung und der Multicast-Nachricht (Punkt-zu-Mehrpunkt-Datenübertragung) 124 von 65536 Sekunden. Dies ergibt umgerechnet etwa 18 Stunden.

Es sollte somit sichergestellt werden, dass alle notwendigen Teilnehmer für die Multicast-Nachricht (Punkt-zu-Mehrpunkt-Datenübertragung) 124 innerhalb von 18 Stunden vor der Nachricht informiert werden können.

In großen Netzen mit mehreren Hunderttausend Teilnehmern (z.B. Knoten) 106_1-106_n lässt sich dies typischerweise nicht realisieren, da es Teilnehmer geben kann, welche nur einmal am Tag oder noch seltener Daten an die Basisstation 104 übertragen. Somit ist es mit den oben gegeben Parametern nicht möglich allen Teilnehmern (z.B. Knoten) die anstehende Multicast-Nachricht (Punkt-zu-Mehrpunkt-Datenübertragung) 124 mitzuteilen bzw. zu signalisieren.

Bei Ausführungsbeispielen kann daher allen Teilnehmern, denen die Multicast-Nachricht (Punkt-zu-Mehrpunkt-Datenübertragung) 124 zeitlich vor der maximalen Signalisierungslänge mitgeteilt wird, anstelle des Zeitpunktes der Multicast-Nachricht (Punkt-zu-Mehrpunkt-Datenübertragung) 124 eine (ungefähre) Zeit mitgeteilt werden, zu denen die Teilnehmer wieder eine Uplink-Nachricht (Uplink-Datenübertragung) 120 an die Basisstation 104 senden sollen/müssen.

Wird diese neue Uplink-Nachricht (Uplink-Datenübertragung) 120 von dem Teilnehmer ausgesendet, kann die Basisstation 104 wieder eine Downlink-Nachricht (Downlink-Datenübertragung) 122 zurückschicken und in dieser dann den Zeitpunkt der Multicast-Nachricht (Punkt-zu-Mehrpunkt-Datenübertragung) 124 mitteilen.

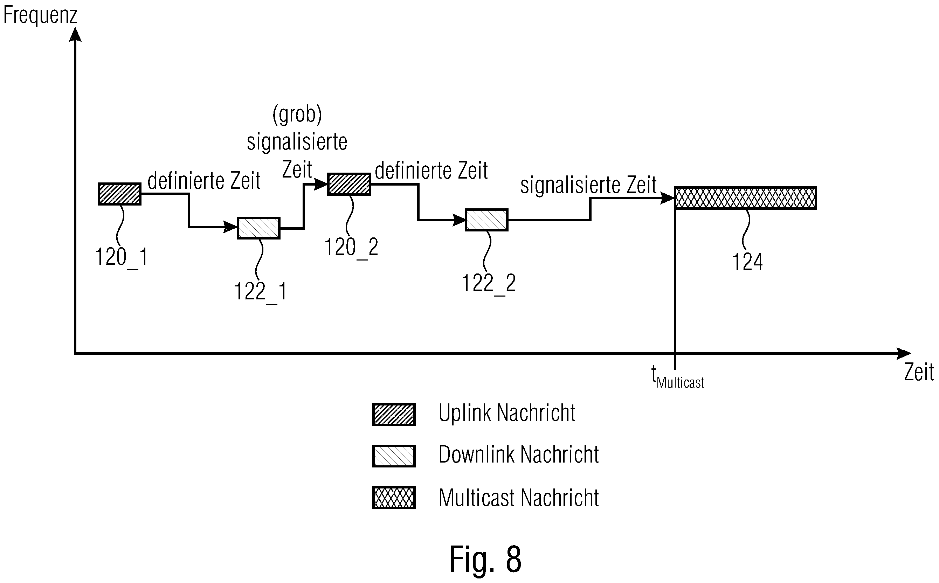

Der zeitliche Ablauf dieses Schemas ist in Fig. 8 skizziert. Dabei wurde in der ersten Downlink-Nachricht (ersten Downlink-Datenübertragung) 122_1 eine (grobe) Zeit für eine weitere Uplink-Nachricht (zweite Uplink-Datenübertragung) 120_2 übertragen. In der zweiten Downlink-Nachricht (zweiten Downlink-Datenübertragung) 122_2 folgte dann die Mitteilung über den Zeitpunkt und/oder Frequenz für die Multicast-Nachricht (Punkt-zu-Mehrpunkt-Datenübertragung) 124.

Im Detail zeigt Fig. 8 in einem Diagramm eine Belegung des Frequenzbands des Kommunikationssystems 100 bei der Durchführung einer ersten Uplink-Datenübertragung 120_1, einer ersten Downlink-Datenübertragung 122_1, einer zweiten Uplink-Datenübertragung 120_1, einer zweiten Downlink-Datenübertragung 122_2 sowie einer Punkt-zu-Mehrpunkt-Datenübertragung 124, gemäß einem Ausführungsbeispiel der vorliegenden Erfindung. Dabei beschreibt in Fig. 8 die Ordinate die Frequenz und die Abszisse die Zeit.

Wie in Fig. 8 zu erkennen ist, erfolgt die erste Downlink-Datenübertragung 122 zeitlich synchronisiert zu der ersten Uplink-Datenübertragung 120_1, z.B. nach einer vorgegebenen (definierten) Zeit nach der ersten Uplink-Datenübertragung 120_1. Die erste Downlink-Datenübertragung 122 weist eine erste Signalisierungsinformation auf.

Die erste Signalisierungsinformation kann eine der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigen bzw. signalisieren, wobei in dem in Fig. 8 gezeigten Ausführungsbeispiel die weitere Datenübertragung sowohl die zweite Uplink-Datenübertragung 120_2 als auch die darauf zeitlich synchronisiert folgende zweite Downlink-Datenübertragung 122_2 umfassen kann.

Wie in Fig. 8 angedeutet ist, kann die erste Signalisierungsinformation einen Zeitraum oder Zeitpunkt (z.B. groben Zeitpunkt) für die zweite Uplink-Datenübertragung 120_2 signalisieren, wobei die zweite Uplink-Datenübertragung 122_2 zu dem mit der ersten Signalisierungsinformation signalisierten Zeitraum bzw. groben Zeitpunkt erfolgt, und wobei die zweite Downlink-Datenübertragung 122_2 zeitlich synchronisiert zu der zweiten Uplink-Datenübertragung 120_2, z.B. nach einer vorgegebenen (definierten) Zeit nach der ersten Uplink-Datenübertragung 120_1, erfolgt. Die zweite Downlink-Datenübertragung 122_2 kann eine zweite Signalisierungsinformation aufweisen, wobei die zweite Signalisierungsinformation die nachfolgende Punkt-zu-Mehrpunkt-Datenübertragung 124 der Basisstation 104 anzeigt bzw. signalisiert.

Die zweite Signalisierungsinformation kann beispielsweise, wie dies in Fig. 8 angedeutet ist, eine Information über einen Zeitpunkt der Punkt-zu-Mehrpunkt-Datenübertragung 124 aufweisen. Natürlich kann die zweite Signalisierungsinformation auch zusätzlich oder alternativ eine Information über eine Frequenz oder einen Frequenzkanal der Punkt-zu-Mehrpunkt-Datenübertragung 124 aufweisen. Sofern die Punkt-zu-Mehrpunkt-Datenübertragung 124 basierend auf dem Telegram-Splitting-Übertragungsverfahren (TSMA, Telegram Splitting Multiple Access) übertragen wird, kann die zweite Signalisierungsinformation auch zusätzlich oder alternativ eine Information über das Zeit- und/oder Frequenzsprungmuster der Punkt-zu-Mehrpunkt-Datenübertragung 124 aufweisen.

Mit anderen Worten, Fig. 8 zeigt eine Signalisierung einer Zeit für eine weitere Uplink-Nachricht (z.B. zweite Uplink-Datenübertragung) 120_2, wobei auf die weitere Uplink-Nachricht (z.B. zweite Uplink-Datenübertragung) 120_2 eine weitere Downlink-Nachricht (z.B. zweite Downlink-Datenübertragung) 122_2 folgt, die z.B. eine Zeit zu der Multicast-Nachricht (z.B. Punkt-zu-Mehrpunkt-Datenübertragung) 124 definiert

Sendet ein Teilnehmer noch seltener Nachrichten an die Basisstation 104, beispielsweise nur einmal pro Woche, ist es auch möglich mehrmals eine weitere Uplink-Nachricht (Uplink-Datenübertragung) anzufordern, solange bis die nötige Zeit zur Signalisierung innerhalb des gültigen Bereichs liegt.

Bei Ausführungsbeispielen kann anstelle der Signalisierung des Zeitpunktes der Multicast-Nachricht (Punkt-zu-Mehrpunkt-Datenübertragung), eine (grobe, ungefähre) Zeit definiert werden, zu der der Teilnehmer eine weitere Uplink-Nachricht verschicken soll/muss.

Durch die fehlende Koordination des Kommunikationssystems (Funknetzes) 100 kann es zu Störungen und Ausfällen bei der Übertragung kommen. Häufig wird das hierin beschriebene Kommunikationssystem 100 in lizenzfreien Bändern betrieben, in denen sich das Kommunikationssystem 100 die Ressourcen mit anderen Kommunikationssystemen (vgl. Fig. 3) teilt, wobei das Kommunikationssystem 100 und die anderen Kommunikationssysteme gegenseitig nicht koordiniert sind. Somit kann es ebenfalls zu Störungen durch fremde Kommunikationssysteme kommen.

Durch das Telegram-Splitting-Übertragungsverfahren wurde zwar eine Methodik entwickelt, welche eine sehr hohe Störfestigkeit aufweist, jedoch kann auch hier keine hundertprozentige Durchkommenswahrscheinlichkeit garantiert werden.

Wurde einem Teilnehmer nach Abschnitt 1.3 eine weitere Aussendung einer Uplink-Nachricht (Uplink-Datenübertragung) mitgeteilt, kann der Teilnehmer mit einer sicheren Antwort der Basisstation 104 im Downlink (z.B. in Form einer Downlink-Datenübertragung) rechnen.

Wird von dem Teilnehmer jedoch keine oder nur eine falsche/fehlerhafte/zerstörte Downlink-Nachricht (Downlink-Datenübertragung) empfangen, ist dem Teilnehmer bekannt, dass bei der Übertragung etwas nicht korrekt gelaufen ist (z.B. durch Störung im Kanal).

In diesem Fall kann der Teilnehmer zeitnah eine weitere Uplink-Nachricht (z.B. eine dritte Uplink-Datenübertragung) (z.B. eine Wiederholung der vorherigen Uplink-Nachricht (z.B. der zweiten Uplink-Datenübertragung 120_2)) an die Basisstation 104 senden. Danach wird wieder auf die Downlink-Nachricht (z.B. dritte Downlink-Datenübertragung) der Basisstation 104 gewartet. Wird diese nun korrekt empfangen, ist sichergestellt, dass die Uplink-Nachricht (z.B. dritte Uplink-Datenübertragung) nun korrekt an der Basisstation 104 eingetroffen ist. Andernfalls kann der Teilnehmer ein weiteres Empfangsfenster (z.B. für eine weitere Downlink-Datenübertragung) aufmachen (insofern das der Basisstation 104 bekannt ist) oder eine nochmalige Aussendung einer Uplink-Nachricht (Uplink-Datenübertragung) vornehmen.

Bei Ausführungsbeispielen kann, sofern auf die zeitlich (grob) signalisierte weitere Uplink-Nachricht (z.B. zweite Uplink-Datenübertragung), keine korrekte Antwort im Downlink (z.B. in Form einer zweiten Downlink-Datenübertragung) erhalten wurde, (zeitnah) eine weitere Uplink-Nachricht (z.B. dritte Uplink-Datenübertragung) versendet werden.

Alternativ zur Signalisierung der Multicast-Nachricht (Punkt-zu-Mehrpunkt-Datenübertragung) 124 kann auch weiterhin der Zeitpunkt der Multicast-Nachricht (Punkt-zu-Mehrpunkt-Datenübertragung) 124 mittgeteilt werden, jedoch mit einer anderen Auflösung (z.B. 1 min -> 1,5 Monate Range). Der Teilnehmer kann dann selbst entscheiden wann (vor der Multicast-Nachricht (Punkt-zu-Mehrpunkt-Datenübertragung) 124) er wieder eine Uplink-Nachricht (z.B. vierte Uplink-Datenübertragung) sendet, um den genaueren Zeitpunkt (der Punkt-zu-Mehrpunk-Datenübertragung 124) zu erhalten.

Dadurch kann der Teilnehmer z.B. bis 1h vor der Multicast-Nachricht (Punkt-zu-Mehrpunkt-Datenübertragung) 124 warten, ob ohnehin ein Uplink-Nachricht (Uplink-Datenübertragung) notwendig ist und er damit den genauen Zeitpunkt erhält. Ist dies nicht der Fall, dann kann der Teilnehmer eine dedizierte Uplink-Nachricht (z.B. vierte Uplink-Datenübertragung) senden. Die dedizierte Uplink-Nachricht (z.B. vierte Uplink-Datenübertragung) sollte dabei natürlich (pseudo) zufällig in der verbleibenden Zeit platziert werden, damit nicht alle Teilnehmer (z.B. Knoten), die noch keine genaue Zeitsynchronisation für die Multicast-Nachricht (Punkt-zu-Mehrpunkt-Datenübertragung) 124 haben, auf einmal senden.

Bei Ausführungsbeispielen kann die Auflösung bei der Signalisierung des Zeitpunktes bei Teilnehmern, die lange vor der eigentlichen Multicast Nachricht informiert werden, größer gewählt werden. Der Teilnehmer kann dann zunächst abwarten ob bis kurz vor der Multicast-Nachricht (Punkt-zu-Mehrpunkt-Datenübertragung) 124 eine Uplink-Nachricht (Uplink-Datenübertragung) angefallen ist. Falls nicht kann eine dedizierte Uplink-Nachricht (z.B. vierte Uplink-Datenübertragung) ausgelöst werden.

### 1.4 Signalisierung der Zeit und/oder des Frequenzkanals einer Stützbake

Bei Ausführungsbeispielen kann vor der Übertragung einer Multicast-Nachricht (Punkt-zu-Mehrpunkt-Datenübertragung) 124 eine sog. Stützbake eingesetzt werden. In einer solchen Stützbake kann eine Signalisierung bis zur nächsten Stützbake bzw. bis zur Multicast-Nachricht (Punkt-zu-Mehrpunkt-Datenübertragung) 124 enthalten sein.

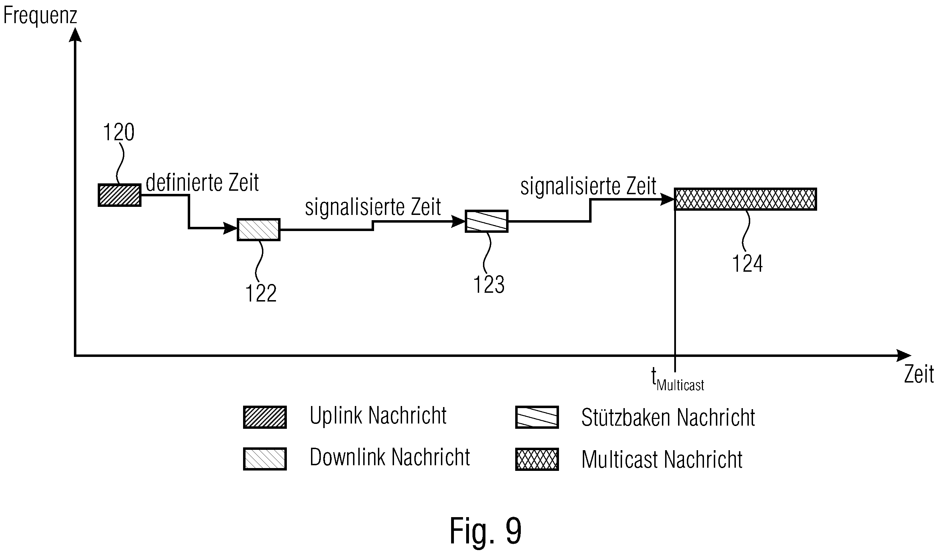

Bei Ausführungsbeispielen können die Teilnehmer (des Kommunikationssystems 100) auf diese Stützbaken synchronisiert werden. In gleicher Weise wie in Abschnitt 1.1 kann z.B. die Zeit bis zur Stützbake und ggf. der verwendete Frequenzkanal der Stützbake signalisiert werden, wie dies schematisch in Fig. 9 skizziert ist.

Fig. 9 zeigt in einem Diagramm eine Belegung des Frequenzbands des Kommunikationssystems 100 bei der Durchführung einer Uplink-Datenübertragung 120, einer Downlink-Datenübertragung 122 sowie einer Punkt-zu-Mehrpunkt-Datenübertragung 124, gemäß einem Ausführungsbeispiel der vorliegenden Erfindung. Dabei beschreibt in Fig. 9 die Ordinate die Frequenz und die Abszisse die Zeit.

Wie in Fig. 9 zu erkennen ist, erfolgt die Downlink-Datenübertragung 122 zeitlich synchronisiert zu der Uplink-Datenübertragung 120, z.B. nach einer vorgegebenen (definierten) Zeit nach der Uplink-Datenübertragung 120. Die Downlink-Datenübertragung 122 weist eine erste Signalisierungsinformation auf.

Die erste Signalisierungsinformation kann eine der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigen bzw. signalisieren, wobei in dem in Fig. 9 gezeigten Ausführungsbeispiel die weitere Datenübertragung eine Stützbake 123 ist.

Wie in Fig. 9 angedeutet ist, kann die erste Signalisierungsinformation eine Information über einen Zeitpunkt des Stützbakens 123 aufweisen. Natürlich kann die erste Signalisierungsinformation auch zusätzlich oder alternativ eine Information über eine Frequenz oder einen Frequenzkanal der Stützbake aufweisen. Sofern die Stützbake 123 basierend auf dem Telegram-Splitting-Übertragungsverfahren (TSMA, Telegram Splitting Multiple Access) übertragen wird, kann die erste Signalisierungsinformation auch zusätzlich oder alternativ eine Information über das Zeit- und/oder Frequenzsprungmuster der Stützbake 124 aufweisen.

Die Stützbake kann eine zweite Signalisierungsinformation aufweisen, wobei die zweite Signalisierungsinformation eine weitere Stützbake oder die nachfolgende Punkt-zu-Mehrpunkt-Datenübertragung 124 der Basisstation 104 anzeigt bzw. signalisiert.

Die zweite Signalisierungsinformation kann beispielsweise, wie dies in Fig. 9 angedeutet ist, eine Information über einen Zeitpunkt der Punkt-zu-Mehrpunkt-Datenübertragung 124 aufweisen. Natürlich kann die zweite Signalisierungsinformation auch zusätzlich oder alternativ eine Information über eine Frequenz oder einen Frequenzkanal der Punkt-zu-Mehrpunkt-Datenübertragung 124 aufweisen. Sofern die Punkt-zu-Mehrpunkt-Datenübertragung 124 basierend auf dem Telegram-Splitting-Übertragungsverfahren (TSMA, Telegram Splitting Multiple Access) übertragen wird, kann die zweite Signalisierungsinformation auch zusätzlich oder alternativ eine Information über das Zeit- und/oder Frequenzsprungmuster der Punkt-zu-Mehrpunkt-Datenübertragung 124 aufweisen.

Mit anderen Worten, Fig. 9 zeigt eine Signalisierung der Zeit und ggf. des Frequenzoffsets von einer Nachricht eines Teilnehmers (Downlink-Datenübertragung 120) bis zu einer Stützbake 123.

Bei Ausführungsbeispielen kann einem individuell generierten Downlink-Datenpaket (z.B. einer Downlink-Datenübertragung 120) zu einem Teilnehmer die Information über den Sendezeitpunkt und/oder Sendekanal (Sendefrequenz) und/oder Sprungmuster (nur bei TSMA) einer Stützbake angehängt werden.

### 1.5 Kompensation von Quarzoffsets

Wie bereits Abschnitt 1.2 erwähnt wurde, besitzen sowohl die Teilnehmer 106_1-106_n als auch die Basisstation 104 in der Regel Schwingquarze (z.B. als Taktgeber) zur Erzeugung interner Referenzfrequenzen. Diese Quarze sind jedoch nicht ideal und besitzen sog. Toleranzen auf den bereitgestellten Frequenzen. Diese Toleranzen übertragen sich auch auf die internen Referenzfrequenzen.

Aus diesen Referenzfrequenzen werden unter anderem die Sendefrequenz als auch die Zeitgeber (engl. timer) gespeist, welche die Zeitdifferenzen zwischen den Nachrichten bestimmen. Somit wirken sich die Toleranzen des Quarzes direkt auf die Übertragung und auch den Empfang von Nachrichten aus.

In [4] wird beispielsweise die Empfangsfrequenz eines Teilnehmers aus der Uplink-Nachricht (Uplink-Datenübertragung) geschätzt und die Sendefrequenz im Downlink entsprechend so modifiziert, dass der Teilnehmer die Downlink-Nachricht (Downlink-Datenübertragung) ohne Frequenzoffset empfangen kann. Mit anderen Worten, die Eigenschaften der Downlink-Nachricht (Downlink-Datenübertragung) werden entsprechend des Frequenzoffsets (des Quarzes) des Teilnehmers so angepasst, dass der Teilnehmer den Frequenzoffset des Quarzes nicht mehr sieht.

Dieses Schema funktioniert einwandfrei, solange nur eine Kommunikation zwischen einer Basisstation 104 und einem Teilnehmer 106_1 erfolgt. Kommuniziert eine Basisstation 100 mit zwei oder mehr Teilnehmern 106_1-106_n, erhält die Basisstation 104 für jeden der Teilnehmer 106_1-106_n einen anderen Frequenzoffset, welcher durch den jeweiligen Quarz erzeugt wurde.

Damit ist es nicht möglich eine Multicast-Nachricht (Punkt-zu-Mehrpunkt-Datenübertragung) 124 an alle Teilnehmer 106_1-106_n so zu versenden, dass alle Teilnehmer 106_1-106_n keinen oder einen vernachlässigbar geringen Frequenzoffset und/oder Zeitoffset (Zeitversatz) durch ihren Quarz sehen.

Jeder Teilnehmer (z.B. Knoten) muss aufgrund seiner zulässigen Toleranzen eine Zeit- und Frequenzsynchronisation bei Beginn der Multicast-Nachricht (Punkt-zu-Mehrpunkt-Datenübertragung) 124 durchführen.

Ausgehend von einem typischen Schwingquarz mit 20 ppm Toleranzbereich und der beispielhaft in Abschnitt 1.3 gezeigten maximalen Signalisierungslänge von ca. 18 h ergibt sich eine maximale zeitliche Ungenauigkeit des Teilnehmers zum Zeitpunkt der Übertragung der Multicast-Nachricht (Punkt-zu-Mehrpunkt-Datenübertragung) 124 von 65536 s * 20 ppm = 1,31 s. Der Teilnehmer muss somit einen Suchbereich von ± 1,31 s vor und nach dem angenommenen Zeitpunkt der Multicast-Nachricht (Punkt-zu-Mehrpunkt-Datenübertragung) 124 nach dem korrekten Zeitpunkt absuchen.

Ähnliches gilt für den Frequenzoffset, bei einer typischen Trägerfrequenz von 900 MHz beträgt der maximale Offset ± 18 kHz, welcher vom jeweiligen Teilnehmer abgesucht werden muss.

Sind im Teilnehmer entsprechend schnelle Prozessoren für eine Echtzeitsuche vorhanden, kann dieser den korrekten Zeitpunkt und den Frequenzoffset ohne großen Speicherbedarf ermitteln. Kann die Suche jedoch nicht echtzeitfähig durchgeführt werden, kann alternativ eine Speicherung aller Basisbanddaten für eine anschließende Offline-Auswertung erfolgen.

Im zweiten Fall besitzen die Teilnehmer typischerweise nur sehr kleine Mikroprozessoren, auf denen eine komplette Speicherung der Basisbanddaten mit solch großen Ungenauigkeiten nicht möglich ist.

Es sei das folgende Beispiel betrachtet: Die Datenrate der Multicast-Nachricht (Punkt-zu-Mehrpunkt-Datenübertragung) 124 beträgt 5 kHz. Bei den oben erwähnten 20 ppm Quarzoffset beträgt die abzusuchende Bandbreite somit mindestens 2*18 kHz + 5 kHz = 41 kHz. Damit beträgt die Abtastrate bei Verwendung eines SDR-Frontends im Basisband (I-Phase und Q-Phase) ebenfalls mindestens 41 kSamples/s. Bei dem oben erwähnten Suchbereich von ±1,31 s müssen somit 107.420 Samples im Speicher für die Verarbeitung zwischengespeichert werden können. Bei einer typischen ADC-Auflösung von 16 Bit (16 Bit I-Phase und 16 Bit Q-Phase) benötigt dies einen mindestens 429,680 kByte großen Arbeitsspeicher. Typische Werte für Arbeitsspeicher auf kleinen Mikroprozessoren liegen unter 100 kByte (z.B. 64 kByte). Somit kann eine Offlineverarbeitung des gesamten Suchbereichs nicht erfolgen.

In beiden Fällen ist zusätzlich ein sehr hoher Rechenaufwand von Nöten und somit wird auch der Stromverbrauch deutlich erhöht, was gerade bei batteriebetriebenen Teilnehmern sehr kritisch ist.

Es gilt somit große Suchbereiche sowohl in Zeit- als auch in Frequenzrichtung zu vermeiden.

In manchen Systemen besitzen die Teilnehmer auch mehr als einen Quarz, wie z.B. einen LF-Quarz (LF = low frequency, dt. Niedrigfrequenz) und einen HF-Quarz (HF = high frequency, dt. Hochfrequenz). Der LF-Quarz benötigt in der Regel weniger Strom als der HF-Quarz. Deshalb wird der LF-Quarz in der Regel dauerhaft betrieben und davon die Timings abgeleitet. Der Funkchip benötigt jedoch einen höheren Takt und wird deshalb mit dem HF-Quarz betrieben. Die Sendefrequenz hängt somit vom HF-Quarz ab. Der HF-Quarz kann aus Stromgründen zwischen den Aussendungen abgeschaltet werden.

Der LF-Quarz hat typischerweise eine höhere Toleranz als der HF-Quarz. Beispielsweise kann der LF-Quarz eine Toleranz von z.B. 100 ppm aufweisen, wohingegen der HF-Quarz eine Toleranz von z.B. 20 ppm aufweisen kann.

Wie bereits erwähnt wird in [4] eine Messung/Schätzung der Trägerfrequenz durchgeführt. Daraus kann mit Hilfe der erwarteten Trägerfrequenz der Frequenzoffset und daraus der Quarzfehler bestimmt werden. Alternativ oder in Kombination mit der Schätzung der Trägerfrequenz, wäre es ebenfalls möglich die Zeitabstände (zwischen zwei Telegrammen/Pakten/Aussendungen oder innerhalb einer Aussendung bei Telegram-Splitting) zu messen, um die Abweichung des Quarzes zu schätzen.

Dieser Offset bzw. diese Offsets kann bzw. können zusammen mit den Parametern aus den vorherigen Abschnitten 1.1 bis 1.4 ebenfalls im Downlink (d.h. mit der Downlink-Datenübertragung) übertragen werden. Dadurch kennt der Teilnehmer nun seinen Quarzoffset zum Zeitpunkt der Aussendung der Uplink-Nachricht (Uplink-Datenübertragung).

Alternativ kann auch der mittlere Quarzoffset aus mehreren vorherigen Uplink-Nachrichten (Uplink-Datenübertragungen) verwendet werden und/oder falls die Temperatur vorhanden sein sollte, die Temperaturabhängigkeit mit einbezogen werden (temperaturnormalisierte Frequenzabweichung mitteilen).

Wird die Methode der Quarzoffset-Bestimmung durch den Zeitversatz angewandt, kann auch der akkumulierte Offset (z.B. Zeitoffset) bestimmt werden. Hierbei ist der Basisstation 104 die Zeit zwischen zwei beliebigen Aussendungen (z.B. Uplink-Datenübertragungen) (d.h. nicht notwendigerweise zweier aufeinanderfolgender Aussendungen) bekannt. Die Basisstation 104 empfängt nun die beiden Aussendungen (z.B. Uplink-Datenübertragungen) und bestimmt die zeitliche Abweichung zwischen den Aussendungen (z.B. Uplink-Datenübertragungen). Daraus lässt sich der akkumulierte Quarzoffset (z.B. Zeitoffset) bestimmen. Die Abweichungen des Quarzes durch Temperaturschwankungen während der Zeit zwischen den beiden Aussendungen (z.B. Uplink-Datenübertragungen) ist somit akkumuliert, da für die Bestimmung der Sendezeitpunkte der Quarz dauerhaft laufen muss und somit immer die momentanen Umgebungsbedingungen Einfluss auf den Quarz haben.

Anders sieht es aus, wenn der Quarzoffset durch die Sendefrequenz bestimmt wird, da nur der Offset (z.B. Frequenzoffset) zum aktuellen Sendezeitpunkt einen Einfluss auf die Sendefrequenz hat.

Typischerweise ändern sich Umweltbedingungen an dem jeweiligen Teilnehmer nicht schlagartig, so dass angenommen werden kann, dass, wenn der aktuelle Quarzoffset (z.B. Frequenzoffset des Quarzes) bekannt ist, dass der maximale Fehler über der Zeit zwischen Signalisierung der Multicast-Nachricht (Punkt-zu-Mehrpunkt-Datenübertragung) 124 und der eigentlichen Aussendung (der Punkt-zu-Mehrpunkt-Datenübertragung 124), kleiner ist als der maximal zulässige Quarzoffset.

Hierdurch reduziert sich der Suchbereich sowohl in Zeit- als auch in Frequenzrichtung, was Rechenleistung, Speicherplatz und somit auch Energie einspart. Werden die gleichen Parameter wie im vorherigen Beispiel gewählt, nur dass in diesem Fall der Quarzoffset im jeweiligen Teilnehmer auf Basis des Wertes aus der vorhergehenden Uplink-Nachricht (Uplink-Datenübertragung) korrigiert wurde, reduziert sich der maximal mögliche Restoffset (z.B. restliche Frequenzoffset) auf beispielhaft 5 ppm.

Der maximale Suchbereich in Zeitrichtung reduziert sich somit auf 328 ms bzw. in Frequenzrichtung auf 4,5 kHz. Somit ist nur ein Viertel des Speicherplatzes notwendig und auch die Rechenleistung reduziert sich um diesen Faktor.

Ist in den jeweiligen Teilnehmern mehr als einem Quarz verbaut, kann die Basisstation 104 auch für mehrere Quarze entsprechend den Offset (z.B. Frequenzoffset) bestimmt und diesen signalisiert (z.B. in der Downlink-Datenübertragung). Alternativ kann im Teilnehmer (z.B. Knoten) auch eine Kopplung der Quarze durchgeführt werden. Dadurch wird erreicht, dass die (z.B. alle) Quarze (des jeweiligen Teilnehmers) den gleichen Offset (z.B. Frequenzoffset) besitzen. In diesem Fall reicht es aus, wenn die Basisstation 104 nur den Offset (z.B. Frequenzoffset) eines Quarzes schätzt, da der jeweilige Teilnehmer den Offset direkt auf die anderen Quarze anwenden kann.

Bei Ausführungsbeispielen kann der Quarzversatz des Teilnehmers aus der Uplink-Nachricht (Uplink-Datenübertragung) bestimmt und dem Teilnehmer in der folgenden Downlink-Nachricht (Downlink-Datenübertragung) mitgeteilt werden. Der Teilnehmer kann diesen Versatz korrigieren und beim Empfang der Multicast-Nachricht (Punkt-zu-Mehrpunkt-Datenübertragung) entsprechend kleinere Suchfenster wählen.

Alternativ zur Signalisierung des Quarzoffsets (z.B. Frequenzoffsets des Quarzes) aus dem Uplink (z.B. der Uplink-Datenübertragung) kann die Basisstation 104 den Quarzoffset auch dazu verwenden, um den signalisierten Zeitpunkt der Multicast-Nachricht (Punkt-zu-Mehrpunkt-Datenübertragung) anzupassen. Die Basisstation 104 kann hierzu die Abweichung des Zeitpunkts unter Berücksichtigung des Quarzoffsets des Teilnehmers (z.B. Endpunkts) berechnen und entsprechend den "falschen" bzw. korrigierten Zeitpunkt signalisieren. Ähnliches gilt für die Signalisierung des Frequenzkanals und ggf. des Sprungmusters bei Telegram-Splitting.

Der Teilnehmer muss so nichts über seinen Quarzoffset wissen und kann bei der Suche des Beginns der Multicast-Nachricht (Punkt-zu-Mehrpunkt-Datenübertragung) einen geringeren Quarzfehler (siehe oben) annehmen.

Bei Ausführungsbeispielen kann der Quarzversatz (z.B. Frequenzoffset des Quarzes) des Teilnehmers bei der Signalisierung des Startzeitpunktes (z.B. der Punkt-zu-Mehrpunkt-Datenübertragung 124) berücksichtigt und entsprechend in der Basisstation 104 modifiziert werden.

### 2. Weitere Ausführungsbeispiele

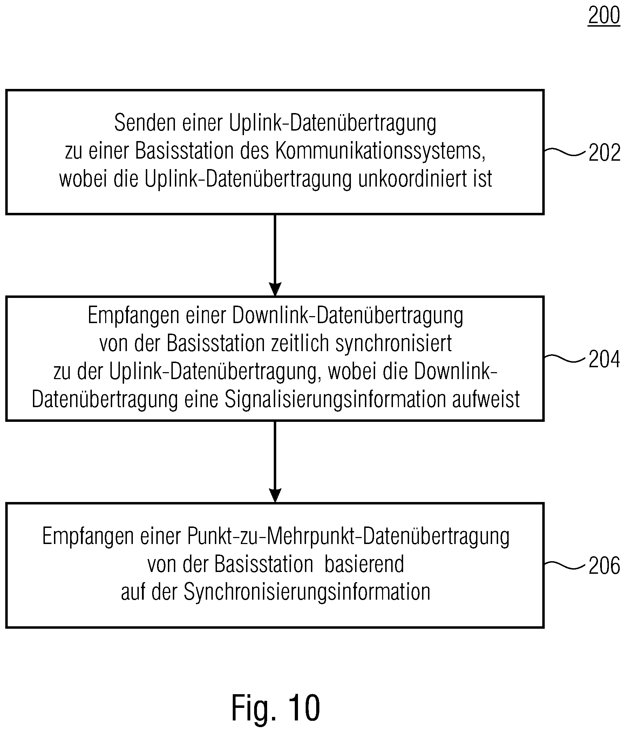

Fig. 10 zeigt ein Flussdiagramm eines Verfahrens 200 zum Betrieb eines Teilnehmers eines Kommunikationssystems, gemäß einem Ausführungsbeispiel der vorliegenden Erfindung. Das Verfahren 200 umfasst einen Schritt 202 des Sendens einer Uplink-Datenübertragung zu einer Basisstation des Kommunikationssystems, wobei die Uplink-Datenübertragung unkoordiniert ist. Ferner umfasst das Verfahren 200 einen Schritt 204 des Empfangens einer Downlink-Datenübertragung von der Basisstation zeitlich synchronisiert zu der Uplink-Datenübertragung, wobei die Downlink-Datenübertragung eine Signalisierungsinformation aufweist. Ferner umfasst das Verfahren 200 einen Schritt 206 des Empfangens einer Punkt-zu-Mehrpunkt-Datenübertragung von der Basisstation basierend auf der Signalisierungsinformation.

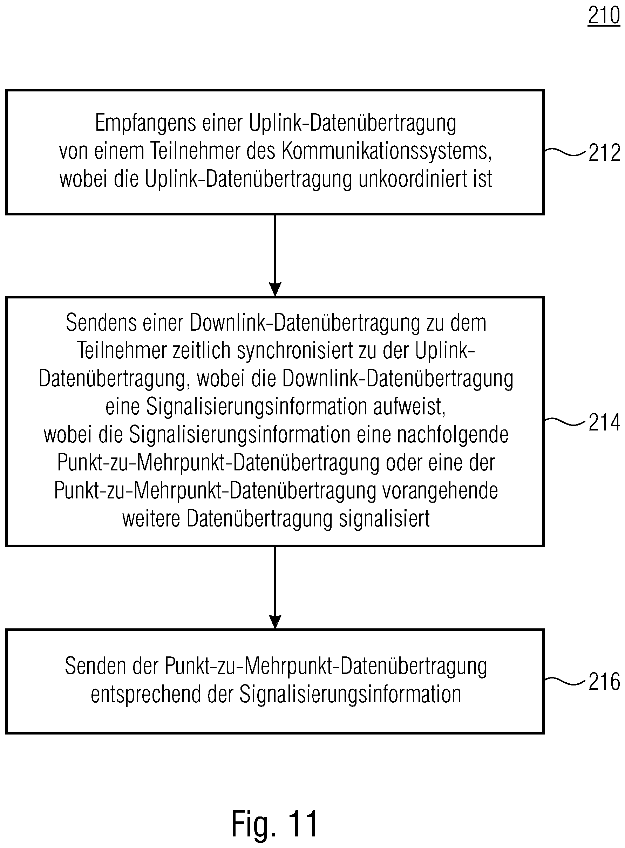

Fig. 11 zeigt ein Flussdiagramm eines Verfahrens 210 zum Betrieb einer Basisstation eines Kommunikationssystems. Das Verfahren 210 umfasst einen Schritt 212 des Empfangens einer Uplink-Datenübertragung von einem Teilnehmer des Kommunikationssystems, wobei die Uplink-Datenübertragung unkoordiniert ist. Ferner umfasst das Verfahren 210 einen Schritt 214 des Sendens einer Downlink-Datenübertragung zu dem Teilnehmer zeitlich synchronisiert zu der Uplink-Datenübertragung, wobei die Downlink-Datenübertragung eine Signalisierungsinformation aufweist, wobei die Signalisierungsinformation eine nachfolgende Punkt-zu-Mehrpunkt-Datenübertragung oder eine der Punkt-zu-Mehrpunkt-Datenübertragung vorangehende weitere Datenübertragung signalisiert. Ferner umfasst das Verfahren 210 einen Schritt des Sendens 216 der Punkt-zu-Mehrpunkt-Datenübertragung entsprechend der Signalisierungsinformation.

Ausführungsbeispiele der vorliegenden Erfindung befassen sich mit einem System (Kommunikationssystem) zur digitalen Übertragung von Daten über ein Funkübertragungssystem. Die gesendeten Daten werden dabei typischerweise in mehreren Teilfrequenzkanälen der gesamten, zur Verfügung stehenden Bandbreite übertragen.

Ausführungsbeispiele der vorliegenden Erfindung können in sog. nicht koordinierten Netzten (Kommunikationssystemen) eingesetzt werden, in denen die Funkteilnehmer ihre Daten unkoordiniert (ohne vorherige Zuteilung einer Funkressource) übertragen.

Ausführungsbeispiele der vorliegenden Erfindung können beispielsweise in einem Kommunikationssystem, wie es in dem ETSI TS 103 357 Standard [4] definiert ist, angewendet werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.
[2] DE 10 2011 082 098 B1
[3] DE 10 2017 206 236 A1
[4] ETSI TS 103 357 Standard v1.1.1

## Patentansprüche

1. Endpunkt (106_1) eines Kommunikationssystems (100),
wobei der Endpunkt (106_1) ausgebildet ist, um eine Uplink-Datenübertragung (120) zu einer Basisstation (104) des Kommunikationssystems (100) zu senden, wobei ein Sendezeitpunkt der Uplink-Datenübertragung (120) von dem Endpunkt (106_1) selbst bestimmt ist,
wobei der Endpunkt (106_1) ausgebildet ist, um nach einer vorgegeben Zeit nach der Uplink-Datenübertragung (120) in einem vorgegebenen Zeitintervall eine Downlink-Datenübertragung (122) von der Basisstation (104) zu empfangen, wobei die Downlink-Datenübertragung (122) eine Signalisierungsinformation aufweist,
wobei der Endpunkt (106_1) ausgebildet ist, um basierend auf der Signalisierungsinformation eine Punkt-zu-Mehrpunkt-Datenübertragung (124) von der Basisstation (104) zu empfangen.

2. Endpunkt (106_1) nach dem vorangehenden Anspruch,
wobei die Signalisierungsinformation eine Information über einen Zeitpunkt der Punkt-zu-Mehrpunkt-Datenübertragung (124) aufweist.

3. Endpunkt (106_1) nach Anspruch 2,
wobei die Signalisierungsinformation ferner eine Information über einen Frequenzkanal der Punkt-zu-Mehrpunkt-Datenübertragung (124) aufweist,
und/oder
wobei die Punkt-zu-Mehrpunkt-Datenübertragung (124) eine Mehrzahl von Sub-Datenpaketen aufweist, die in der Zeit- und oder Frequenz entsprechend eines Zeit- und/oder Frequenzsprungmusters verteilt übertragen werden, wobei die Signalisierungsinformation ferner eine Information über das Zeit- und oder Frequenzsprungmuster aufweist.

4. Endpunkt (106_1) nach einem der vorangehenden Ansprüche,
wobei die Downlink-Datenübertragung (122) ferner eine Taktgeberkorrekturinformation zur Korrektur einer Taktabweichung eines Taktgebers des Endpunkts (106_1) aufweist, wobei der Endpunkt (106_1) ausgebildet ist, um eine Taktabweichung des Taktgebers basierend auf der Taktgeberkorrekturinformation zu korrigieren,
und/oder
wobei die Uplink-Datenübertragung (120) eine erste Uplink-Datenübertragung (120_1) ist, wobei die Downlink-Datenübertragung (122) eine erste Downlink-Datenübertragung (122_1) ist, wobei die Signalisierungsinformation eine erste Signalisierungsinformation ist, wobei die erste Signalisierungsinformation einen Zeitraum oder Zeitpunkt für eine zweite Uplink-Datenübertragung (120_2) signalisiert, wobei der Endpunkt (106_1) ausgebildet ist, um in dem signalisierten Zeitraum die zweite Uplink-Datenübertragung (120_2) zu der Basisstation (104) zu senden und um zeitlich synchronisiert zu der zweiten Uplink-Datenübertragung (120_2) eine zweite Downlink-Datenübertragung (122_2) von der Basisstation (104) zu empfangen, wobei die zweite Downlink-Datenübertragung (122_2) eine zweite Signalisierungsinformation aufweist, wobei der Endpunkt (106_1) ausgebildet ist, um basierend auf der zweiten Signalisierungsinformation die Punkt-zu-Mehrpunkt-Datenübertragung (124) zu Empfangen.

5. Endpunkt (106_1) nach Anspruch 1,
wobei die Signalisierungsinformation eine erste Signalisierungsinformation ist,
wobei die erste Signalisierungsinformation eine Information über einen Zeitpunkt eines Stützbakens aufweist,
wobei der Endpunkt (106_1) ausgebildet ist, um basierend auf der ersten Signalisierungsinformation den Stützbaken zu empfangen, wobei der Stützbaken eine fünfte Signalisierungsinformation aufweist,
wobei der Endpunkt (106_1) ausgebildet ist, um basierend auf der fünften Signalisierungsinformation die Punkt-zu-Mehrpunkt-Datenübertragung (124) zu Empfangen.

6. Endpunkt (106_1) nach einem der vorangehenden Ansprüche,
wobei der Endpunkt (106_1) ausgebildet ist, um Daten asynchron zu anderen Endpunkten und/oder der Basisstation (104) des Kommunikationssystems (100) zu senden,
und/oder
wobei der Endpunkt (106_1) ausgebildet ist, um die Uplink-Datenübertragung (120) zu einem zufälligen oder pseudozufälligen Zeitpunkt zu der Basisstation (104) zu senden,
und/oder
wobei die Uplink-Datenübertragung (120) eine Mehrzahl von Sub-Datenpaketen aufweist, die in der Zeit- und oder Frequenz entsprechend eines Zeit- und/oder Frequenzsprungmusters verteilt übertragen werden,
und/oder
wobei die Downlink-Datenübertragung (122) eine Mehrzahl von Sub-Datenpaketen aufweist, die in der Zeit- und oder Frequenz entsprechend eines Zeit- und/oder Frequenzsprungmusters verteilt übertragen werden.

7. Endpunkt (106_1) nach einem der vorangehenden Ansprüche,
wobei der Endpunkt (106_1) ein Sensorknoten oder Aktorknoten ist,
und/oder
wobei der Endpunkt (106_1) batteriebetrieben ist,
und/oder
wobei der Endpunkt (106_1) ein Energy-Harvesting-Element zur elektrischen Energiegewinnung aufweist.

8. Basisstation (104) eines Kommunikationssystems (100),
wobei die Basisstation (104) ausgebildet ist, um eine Uplink-Datenübertragung (120) von einem Endpunkt (106_1) des Kommunikationssystems (100) zu empfangen, wobei ein Sendezeitpunkt der Uplink-Datenübertragung (120) von dem Endpunkt (106_1) selbst bestimmt ist,,
wobei die Basisstation (104) ausgebildet ist, um nach einer vorgegeben Zeit nach der Uplink-Datenübertragung (120) in einem vorgegebenen Zeitintervall eine Downlink-Datenübertragung (122) zu dem Endpunkt (106_1) zu senden, wobei die Downlink-Datenübertragung (122) eine Signalisierungsinformation aufweist, wobei die Signalisierungsinformation eine nachfolgende Punkt-zu-Mehrpunkt-Datenübertragung (124) oder eine der Punkt-zu-Mehrpunkt-Datenübertragung (124) vorangehende weitere Datenübertragung signalisiert,
wobei die Basisstation (104) ausgebildet ist, um die Punkt-zu-Mehrpunkt-Datenübertragung (124) entsprechend der Signalisierungsinformation zu einer Mehrzahl von Endpunkten des Kommunikationssystems, wobei der Endpunkt Teil der Mehrzahl von Endpunkten ist, zu senden.

9. Basisstation (104) nach dem vorangehenden Anspruch,
wobei die Signalisierungsinformation eine Information über einen Zeitpunkt der Punkt-zu-Mehrpunkt-Datenübertragung (124) aufweist.

10. Basisstation (104) nach Anspruch 8 oder 9,
wobei die Basisstation (104) ausgebildet ist, um basierend auf der Uplink-Datenübertragung (120) des Endpunkts (106_1) eine Taktabweichung eines Taktgebers des Endpunkts (106_1) zu ermitteln,
wobei die Basisstation (104) ausgebildet ist, um die Downlink-Datenübertragung (122) mit einer Taktgeberkorrekturinformation zur Korrektur der Taktabweichung des Taktgebers des Endpunkts (106_1) zu versehen.

11. Basisstation (104) nach einem der Ansprüche 8 bis 10,
wobei die Uplink-Datenübertragung (120) eine erste Uplink-Datenübertragung (120_1) ist, wobei die Downlink-Datenübertragung (122) eine erste Downlink-Datenübertragung (122_1) ist, wobei die Signalisierungsinformation eine erste Signalisierungsinformation ist,
wobei die erste Signalisierungsinformation einen Zeitraum oder Zeitpunkt für eine zweite Uplink-Datenübertragung (120_2) signalisiert,
wobei die Basisstation (104) ausgebildet ist, um in dem signalisierten Zeitraum die zweite Uplink-Datenübertragung (120_2) von dem Endpunkt (106_1) zu empfangen und um zeitlich synchronisiert zu der zweiten Uplink-Datenübertragung (120_2) eine zweite Downlink-Datenübertragung (122_2) zu dem Endpunkt (106_1) zu senden, wobei die zweite Downlink-Datenübertragung (122_2) eine zweite Signalisierungsinformation aufweist, wobei die zweite Signalisierungsinformation die nachfolgende Punkt-zu-Mehrpunkt-Datenübertragung (124) signalisiert,
wobei die Basisstation (104) ausgebildet ist, um die Punkt-zu-Mehrpunkt-Datenübertragung (124) entsprechend der zweiten Signalisierungsinformation zu senden.

12. Basisstation (104) nach Anspruch 8,
wobei die Signalisierungsinformation eine erste Signalisierungsinformation ist,
wobei die erste Signalisierungsinformation eine Information über einen Zeitpunkt eines Stützbakens aufweist,
wobei die Basisstation (104) ausgebildet ist, um den Stützbaken entsprechend der ersten Signalisierungsinformation zu senden, wobei der Stützenbaken eine fünfte Signalisierungsinformation aufweist, wobei die fünfte Signalisierungsinformation die nachfolgende Punkt-zu-Mehrpunkt-Datenübertragung (124) signalisiert.

13. Verfahren zum Betrieb eines Endpunkts (106_1) eines Kommunikationssystems (100), wobei das Verfahren aufweist:
Senden einer Uplink-Datenübertragung (120) zu einer Basisstation (104) des Kommunikationssystems (100), wobei ein Sendezeitpunkt der Uplink-Datenübertragung (120) von dem Endpunkt (106_1) selbst bestimmt ist,,
Empfangen einer Downlink-Datenübertragung (122) von der Basisstation (104) nach einer vorgegeben Zeit nach der Uplink-Datenübertragung (120) in einem vorgegebenen Zeitintervall, wobei die Downlink-Datenübertragung (122) eine Signalisierungsinformation aufweist,
Empfangen einer Punkt-zu-Mehrpunkt-Datenübertragung (124) von der Basisstation (104) basierend auf der Signalisierungsinformation.

14. Verfahren zum Betrieb einer Basisstation (104) eines Kommunikationssystems (100), wobei das Verfahren aufweist:
Empfangen einer Uplink-Datenübertragung (120) von einem Endpunkt (106_1) des Kommunikationssystems (100), wobei ein Sendezeitpunkt der Uplink-Datenübertragung (120) von dem Endpunkt (106_1) selbst bestimmt ist,
Senden einer Downlink-Datenübertragung (122) zu dem Endpunkt ( nach einer vorgegeben Zeit nach der Uplink-Datenübertragung (120) in einem vorgegebenen Zeitintervall, wobei die Downlink-Datenübertragung (122) eine Signalisierungsinformation aufweist, wobei die Signalisierungsinformation eine nachfolgende Punkt-zu-Mehrpunkt-Datenübertragung (124) oder eine der Punkt-zu-Mehrpunkt-Datenübertragung (124) vorangehende weitere Datenübertragung signalisiert,
Senden der Punkt-zu-Mehrpunkt-Datenübertragung (124) entsprechend der Signalisierungsinformation zu einer Mehrzahl von Endpunkten des Kommunikationssystems, wobei der Endpunkt Teil der Mehrzahl von Endpunkten ist.

15. Computerprogramm zur Durchführung des Verfahrens gemäß einem der Ansprüche 13 und 14, wenn das Computerprogramm auf einem Computer oder Mikroprozessor abläuft.

## Claims

1. A terminal point (106_1) of a communication system (100),
wherein the terminal point (106_1) is configured to transmit an uplink data transfer (120) to a base station (104) of the communication system (100), wherein a point in time of transmission of the uplink data transfer (120) is determined by the terminal point (106_1) itself,
wherein the terminal point (106_1) is configured to receive, after a specified time after the uplink data transfer (120), a downlink data transfer (122) from the base station (104) in a specified time interval, wherein the downlink data transfer (122) comprises signaling information,
wherein the terminal point (106_1) is configured to receive a point-to-multipoint data transfer (124) from the base station (104) on the basis of the signaling information.

2. The terminal point (106_1) according to the preceding claim,
wherein the signaling information comprises information about a point in time of the point-to-multipoint data transfer (124).

3. The terminal point (106_1) according to claim 2,
wherein the signaling information further comprises information about a frequency channel of the point-to-multipoint data transfer (124),
and/or
wherein the point-to-multipoint data transfer (124) comprises a plurality of sub-data packets transferred distributed in time and/or frequency according to a time and/or frequency hopping pattern, wherein the signaling information further comprises information about the time and/or frequency hopping pattern.

4. The terminal point (106_1) according to any of the preceding claims,
wherein the downlink data transfer (122) further comprises clock generator correction information for correcting a clock deviation of a clock generator of the terminal point (106_1), wherein the terminal point (106_1) is configured to correct a clock deviation of the clock generator on the basis of the clock generator correction information,
and/or
wherein the uplink data transfer (120) is a first uplink data transfer (120_1), wherein the downlink data transfer (122) is a first downlink data transfer (122_1), wherein the signaling information is first signaling information, wherein the first signaling information signals a period of time or point in time for a second uplink data transfer (120_2), wherein the terminal point (106_1) is configured to transmit the second uplink data transfer (120_2) to the base station (104) in the signaled period of time and to receive, temporally synchronized to the second uplink data transfer (120_2), a second downlink data transfer (122_2) from the base station (104), wherein the second downlink data transfer (122_2) comprises second signaling information, wherein the terminal point (106_1) is configured to receive the point-to-multipoint data transfer (124) on the basis of the second signaling information.

5. The terminal point (106_1) according to claim 1,
wherein the signaling information is first signaling information,
wherein the first signaling information comprises information about a point in time of a support beacon,
wherein the terminal point (106_1) is configured to receive the support beacon on the basis of the first signaling information, wherein the support beacon comprises fifth signaling information,
wherein the terminal point (106_1) is configured to receive the point-to-multipoint data transfer (124) on the basis of the fifth signaling information.

6. The terminal point (106_1) according to any of the preceding claims,
wherein the terminal point (106_1) is configured to transmit data asynchronously to other terminal points and/or the base station (104) of the communication system (100),
and/or
wherein the terminal point (106_1) is configured to transmit the uplink data transfer (120) to the base station (104) at a random or pseudo-random point in time,
and/or
wherein the uplink data transfer (120) comprises a plurality of sub-data packets transferred distributed in time and/or frequency according to a time and/or frequency hopping pattern,
and/or
wherein the downlink data transfer (122) comprises a plurality of sub-data packets transferred distributed in time and/or frequency according to a time and/or frequency hopping pattern.

7. The terminal point (106_1) according to any of the preceding claims,
wherein the terminal point (106_1) is a sensor node or actuator node,
and/or
wherein the terminal point (106_1) is battery-operated,
and/or
wherein the terminal point (106_1) comprises an energy harvesting element for generating electric energy.

8. A base station (104) of a communication system (100),
wherein the base station (104) is configured to receive an uplink data transfer (120) from a terminal point (106_1) of the communication system (100), wherein a point in time of transmission of the uplink data transfer (120) is determined by the terminal point (106_1) itself,
wherein the base station (104) is configured to transmit, after a specified time after the uplink data transfer (120), a downlink data transfer (122) to the terminal point (106_1) in a specified time interval, wherein the downlink data transfer (122) comprises signaling information, wherein the signaling information signals a subsequent point-to-multipoint data transfer (124) or a further data transfer preceding the point-to-multipoint data transfer (124),
wherein the base station (104) is configured to transmit the point-to-multipoint data transfer (124) according to the signaling information to a plurality of terminal points of the communication system, wherein the terminal point is part of the plurality of terminal points.

9. The base station (104) according to the preceding claim,
wherein the signaling information comprises information about a point in time of the point-to-multipoint data transfer (124).

10. The base station (104) according claim 8 or 9,
wherein the base station (104) is configured to determine a clock deviation of a clock generator of the terminal point (106_1) on the basis of the uplink data transfer (120) of the terminal point (106_1),
wherein the base station (104) is configured to provide the downlink data transfer (122) with clock generator correction information for correcting the clock deviation of the clock generator of the terminal point (106_1).

11. The base station (104) according to any of claims 8 to 10,
wherein the uplink data transfer (120) is a first uplink data transfer (120_1), wherein the downlink data transfer (122) is a first downlink data transfer (122_1), wherein the signaling information is first signaling information,
wherein the first signaling information signals a period of time or point in time for a second uplink data transfer (120_2),
wherein the base station (104) is configured to receive the second uplink data transfer (120_2) from the terminal point (106_1) in the signaled period of time and to transmit, temporally synchronized to the second uplink data transfer (120_2), a second downlink data transfer (122_2) to the terminal point (106_1), wherein the second downlink data transfer (122_2) comprises second signaling information, wherein the second signaling information signals the subsequent point-to-multipoint data transfer (124),
wherein the base station (104) is configured to transmit the point-to-multipoint data transfer (124) according to the second signaling information.

12. The base station (104) according to claim 8,
wherein the signaling information is first signaling information,
wherein the first signaling information comprises information about a point in time of a support beacon,
wherein the base station (104) is configured to transmit the support beacon according to the first signaling information, wherein the support beacon comprises fifth signaling information, wherein the fifth signaling information signals the subsequent point-to-multipoint data transfer (124).

13. A method for operating a terminal point (106_1) of a communication system (100), the method comprising:
transmitting an uplink data transfer (120) to a base station (104) of the communication system (100), wherein a point in time of transmission of the uplink data transfer (120) is determined by the terminal point (106_1) itself,
receiving, after a specified time after the uplink data transfer (120), a downlink data transfer (122) from the base station (104) in a specified time interval, wherein the downlink data transfer (122) comprises signaling information,
receiving a point-to-multipoint data transfer (124) from the base station (104) on the basis of the signaling information.

14. A method for operating a base station (104) of a communication system (100), the method comprising:
receiving an uplink data transfer (120) from a terminal point (106_1) of the communication system (100), wherein a point in time of transmission of the uplink data transfer (120) is determined by the terminal point (106_1) itself,
transmitting, after a specified time after the uplink data transfer (120), a downlink data transfer (122) to the terminal point (106_1) in a specified time interval, wherein the downlink data transfer (122) comprises signaling information, wherein the signaling information signals a subsequent point-to-multipoint data transfer (124) or a further data transfer preceding the point-to-multipoint data transfer (124),
transmitting the point-to-multipoint data transfer (124) according to the signaling information, to a plurality of terminal points of the communication system, wherein the terminal point is part of the plurality of terminal points.

15. A computer program for performing the method according to claim 13 and 14 if the computer program runs on a computer or a microprocessor.

## Revendications

1. Point d'extrémité (106_1) d'un système de communication (100),
dans lequel le point d'extrémité (106_1) est configuré pour envoyer une transmission de données par liaison montante (120) à une station de base (104) du système de communication (100), dans lequel un moment d'envoi de la transmission de données par liaison montante (120) est déterminé par le point d'extrémité (106_1) lui-même,
dans lequel le point d'extrémité (106_1) est configuré pour recevoir une transmission de données par liaison descendante (122) en provenance de la station de base (104) après un temps prédéfini après la transmission de données par liaison montante (120) dans un intervalle de temps prédéfini, dans lequel la transmission de données par liaison descendante (122) présente des informations de signalisation,
dans lequel le point d'extrémité (106_1) est configuré pour recevoir une transmission de données point à multipoint (124) en provenance de la station de base (104) sur la base des informations de signalisation.

2. Point d'extrémité (106_1) selon la revendication précédente,
dans lequel les informations de signalisation présentent des informations concernant un moment de la transmission de données point à multipoint (124).

3. Point d'extrémité (106_1) selon la revendication 2,
dans lequel les informations de signalisation présentent en outre des informations concernant un canal de fréquence de la transmission de données point à multipoint (124),
et/ou
dans lequel la transmission de données point à multipoint (124) présente une pluralité de sous-paquets de données qui sont transmis de manière répartie dans le temps et/ou la fréquence en fonction d'un modèle de saut de temps et/ou de fréquence, dans lequel les informations de signalisation présentent en outre des informations concernant le modèle de saut de temps et/ou de fréquence.

4. Point d'extrémité (106_1) selon l'une des revendications précédentes,
dans lequel la transmission de données par liaison descendante (122) présente en outre des informations de correction de générateur de cadence permettant de corriger un écart de cadence d'un générateur de cadence du point d'extrémité (106_1), dans lequel le point d'extrémité (106_1) est configuré pour corriger un écart de cadence du générateur de cadence sur la base des informations de correction de générateur de cadence,
et/ou
dans lequel la transmission de données par liaison montante (120) est une première transmission de données par liaison montante (120_1), dans lequel la transmission de données par liaison descendante (122) est une première transmission de données par liaison descendante (122_1), dans lequel les informations de signalisation sont des premières informations de signalisation, dans lequel les premières informations de signalisation signalent une période ou un moment pour une seconde transmission de données par liaison montante (120_2), dans lequel le point d'extrémité (106_1) est configuré pour envoyer la seconde transmission de données par liaison montante (120_2) à la station de base (104) dans la période signalée et pour recevoir, en provenance de la station de base (104), de manière synchronisée dans le temps avec la seconde transmission de données par liaison montante (120_2), une seconde transmission de données par liaison descendante (122_2), dans lequel la seconde transmission de données par liaison descendante (122_2) présente des deuxièmes informations de signalisation, dans lequel le point d'extrémité (106_1) est configuré pour recevoir la transmission de données point à multipoint (124) sur la base des deuxièmes informations de signalisation.

5. Point d'extrémité (106_1) selon la revendication 1,
dans lequel les informations de signalisation sont des premières informations de signalisation,
dans lequel les premières informations de signalisation présentent des informations concernant un moment d'une balise de support,
dans lequel le point d'extrémité (106_1) est configuré pour recevoir la balise de support sur la base des premières informations de signalisation, dans lequel la balise de support présente des cinquièmes informations de signalisation,
dans lequel le point d'extrémité (106_1) est configuré pour recevoir la transmission de données point à multipoint (124) sur la base des cinquièmes informations de signalisation.

6. Point d'extrémité (106_1) selon l'une des revendications précédentes,
dans lequel le point d'extrémité (106_1) est configuré pour envoyer des données de manière asynchrone à d'autres points d'extrémité et/ou à la station de base (104) du système de communication (100),
et/ou
dans lequel le point d'extrémité (106_1) est configuré pour envoyer la transmission de données par liaison montante (120) à la station de base (104) à un moment aléatoire ou pseudo-aléatoire,
et/ou
dans lequel la transmission de données par liaison montante (120) présente une pluralité de sous-paquets de données qui sont transmis de manière répartie dans le temps et/ou la fréquence en fonction d'un modèle de saut de temps et/ou de fréquence,
et/ou
dans lequel la transmission de données par liaison descendante (122) présente une pluralité de sous-paquets de données qui sont transmis de manière répartie dans le temps et/ou la fréquence en fonction d'un modèle de saut de temps et/ou de fréquence.

7. Point d'extrémité (106_1) selon l'une des revendications précédentes,
dans lequel le point d'extrémité (106_1) est un nœud de capteur ou un nœud d'actionneur,
et/ou
dans lequel le point d'extrémité (106_1) est alimenté par batterie,
et/ou
dans lequel le point d'extrémité (106_1) présente un élément de récupération d'énergie pour la production d'énergie électrique.

8. Station de base (104) d'un système de communication (100),
dans laquelle la station de base (104) est configurée pour recevoir une transmission de données par liaison montante (120) en provenance d'un point d'extrémité (106_1) du système de communication (100), dans laquelle un moment d'envoi de la transmission de données par liaison montante (120) est déterminé par le point d'extrémité (106_1) lui-même,
dans laquelle la station de base (104) est configurée pour envoyer une transmission de données par liaison descendante (122) au point d'extrémité (106_1) après un temps prédéfini après la transmission de données par liaison montante (120) dans un intervalle de temps prédéfini, dans laquelle la transmission de données par liaison descendante (122) présente des informations de signalisation, dans laquelle les informations de signalisation signalent une transmission de données point à multipoint (124) suivante ou une autre transmission de données précédant la transmission de données point à multipoint (124),
dans laquelle la station de base (104) est configurée pour envoyer la transmission de données point à multipoint (124) conformément aux informations de signalisation à une pluralité de points d'extrémité du système de communication, dans laquelle le point d'extrémité fait partie de la pluralité de points d'extrémité.

9. Station de base (104) selon la revendication précédente,
dans laquelle les informations de signalisation présentent des informations concernant un moment de la transmission de données point à multipoint (124).

10. Station de base (104) selon la revendication 8 ou 9,
dans laquelle la station de base (104) est configurée pour déterminer, sur la base de la transmission de données par liaison montante (120) du point d'extrémité (106_1), un écart de cadence d'un générateur de cadence du point d'extrémité (106_1),
dans laquelle la station de base (104) est configurée pour fournir à la transmission de données par liaison descendante (122) des informations de correction de générateur de cadence permettant de corriger l'écart de cadence du générateur de cadence du point d'extrémité (106_1).

11. Station de base (104) selon l'une revendications 8 à 10,
dans laquelle la transmission de données par liaison montante (120) est une première transmission de données par liaison montante (120_1), dans laquelle la transmission de données par liaison descendante (122) est une première transmission de données par liaison descendante (122_1), dans laquelle les informations de signalisation sont des premières informations de signalisation,
dans laquelle les premières informations de signalisation signalent une période ou un moment pour une seconde transmission de données par liaison montante (120_2),
dans laquelle la station de base (104) est configurée pour recevoir, dans la période signalée, la seconde transmission de données par liaison montante (120_2) en provenance du point d'extrémité (106_1) et pour envoyer, de manière synchronisée dans le temps avec la seconde transmission de données par liaison montante (120_2), une seconde transmission de données par liaison descendante (122_2) au point d'extrémité (106_1), dans laquelle la seconde transmission de données par liaison descendante (122_2) présente des deuxièmes informations de signalisation, dans laquelle les deuxièmes informations de signalisation signalent la transmission de données point à multipoint (124) suivante,
dans laquelle la station de base (104) est configurée pour envoyer la transmission de données point à multipoint (124) conformément aux deuxièmes informations de signalisation.

12. Station de base (104) selon la revendication 8,
dans laquelle les informations de signalisation sont des premières informations de signalisation,
dans laquelle les premières informations de signalisation présentent des informations concernant un moment d'une balise de support,
dans laquelle la station de base (104) est configurée pour envoyer la balise de support conformément aux premières informations de signalisation, dans laquelle la balise de support présente des cinquièmes informations de signalisation, dans laquelle les cinquièmes informations de signalisation signalent la transmission de données point à multipoint (124) suivante.

13. Procédé permettant de faire fonctionner un point d'extrémité (106_1) d'un système de communication (100), dans lequel le procédé présente :
l'envoi d'une transmission de données par liaison montante (120) à une station de base (104) du système de communication (100), dans lequel un moment d'envoi de la transmission de données par liaison montante (120) est déterminé par le point d'extrémité (106_1) lui-même,
la réception d'une transmission de données par liaison descendante (122) en provenance de la station de base (104) après un temps prédéfini après la transmission de données par liaison montante (120) dans un intervalle de temps prédéfini, dans lequel la transmission de données par liaison descendante (122) présente des informations de signalisation,
la réception d'une transmission de données point à multipoint (124) en provenance de la station de base (104) sur la base des informations de signalisation.

14. Procédé permettant de faire fonctionner une station de base (104) d'un système de communication (100), dans lequel le procédé présente :
la réception d'une transmission de données par liaison montante (120) en provenance d'un point d'extrémité (106_1) du système de communication (100), dans lequel un moment d'envoi de la transmission de données par liaison montante (120) est déterminé par le point d'extrémité (106_1) lui-même,
l'envoi d'une transmission de données par liaison descendante (122) vers le point d'extrémité après un temps prédéfini après la transmission de données par liaison montante (120) dans un intervalle de temps prédéfini, dans lequel la transmission de données par liaison descendante (122) présente des informations de signalisation, dans lequel les informations de signalisation signalent une transmission de données point à multipoint (124) suivante ou une autre transmission de données précédant la transmission de données point à multipoint (124),
l'envoi de la transmission de données point à multipoint (124) conformément aux informations de signalisation à une pluralité de points d'extrémité du système de communication, dans lequel le point d'extrémité fait partie de la pluralité de points d'extrémité.

15. Programme informatique pour la mise en œuvre du procédé selon l'une des revendications 13 et 14, lorsque le programme informatique s'exécute sur un ordinateur ou un microprocesseur.
